(19) Europäisches Patentamt
European Patent Office
Office européen des brevets

(11) **EP 3 926 298 B1**

(12) **FASCICULE DE BREVET EUROPEEN**

(45) Date de publication et mention
de la délivrance du brevet:
**26.02.2025 Bulletin 2025/09**

(21) Numéro de dépôt: **20180573.6**

(22) Date de dépôt: **17.06.2020**

(51) Classification Internationale des Brevets (IPC):
**G01C 17/28** *(2006.01)* **G01C 17/38** *(2006.01)*
**G01C 21/12** *(2006.01)* **G01C 21/16** *(2006.01)*

(52) Classification Coopérative des Brevets (CPC):
**G01C 21/12; G01C 17/28; G01C 17/38;
G01C 21/1654**

(54) **INSTRUMENT DE NAVIGATION AVEC COMPENSATION D'INCLINAISON ET MÉTHODE ASSOCIÉE**

NAVIGATIONSINSTRUMENT MIT NEIGUNGSKOMPENSATION UND ENTSPRECHENDE METHODE

NAVIGATION INSTRUMENT WITH COMPENSATION OF TILT AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**22.12.2021 Bulletin 2021/51**

(73) Titulaire: **ETA SA Manufacture Horlogère Suisse 2540 Grenchen (CH)**

(72) Inventeur: **BESUCHET, Romain 1400 Yverdon-les-Bains (CH)**

(74) Mandataire: **ICB SA Faubourg de l'Hôpital, 3 2001 Neuchâtel (CH)**

(56) Documents cités:
**US-A1- 2013 185 018**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 926 298 B1

**EP 3 926 298 B1**

**Description**

Domaine technique

L'invention a trait à un instrument de navigation, notamment une boussole électronique, avec une compensation d'inclinaison, un dispositif portable comprenant cet instrument, en particulier une montre-bracelet, une méthode associée permettant de déterminer des angles d'orientation de l'instrument de navigation, un programme de mise en œuvre de la méthode en question et un support d'enregistrement de ce programme lisible par ordinateur.

Arrière-plan technologique

Les boussoles électroniques sont de nos jours principalement armées pour la compensation d'inclinaison. Cette méthodologie consiste à mesurer le champ magnétique terrestre selon deux ou trois axes, et à compenser premièrement l'attitude (roulis et tangage) de la boussole (acquise par un accéléromètre et/ou gyroscope) afin d'estimer le cap équivalent, comme si la boussole avait été tenue à l'horizontale, selon ce qui est conseillé de faire dans la pratique. Ces techniques sont généralement appelées (en anglais) « tilt compensation » ou 6-DOF. Par exemple, la demande brevet EP 1 669 718 A1 illustre une boussole électronique avec une mesure du champ magnétique selon deux axes avec une correction du tangage et du roulis.

L'objectif de ces techniques est de pouvoir estimer les angles de tangage et de roulis de la montre (le lacet étant défini par la mesure du champ magnétique terrestre). Généralement, l'angle de roulis est calculé en premier, et l'angle de tangage en second. Le problème principal de cette méthode est que lorsque le tangage approche de 90°, on a une instabilité du calcul du roulis puisque la projection du vecteur gravité sur le plan de mesure du roulis a une norme proche de zéro. Le bruit de mesure de l'accéléromètre génère ainsi des résultats aberrants (« gimbal lock » terme anglais signifiant blocage de cardan en français).

Dans le cadre particulier d'une boussole électronique montée dans une montre, dans le cas où l'utilisateur n'utilise pas sa montre horizontalement pour connaître la direction du Nord ou un cap, il y a de fortes chances qu'il applique un fort tangage (correspondant d'une manière générale à une rotation du poignet pour qu'il puisse regarder son cadran alors que son bras correspondant est levé) plutôt qu'un fort roulis (correspondant d'une manière générale à l'angle formé entre l'avant-bras et l'horizontal) à la montre qu'il porte au poignet lorsqu'il l'observe. Cela provoque une instabilité intolérable du point de vue du produit.

Des solutions existent, comme celles décrites par le document brevet US 2004/0187328 et par ST (www.st.com) dans le « Design Tip » DT5008, où l'on force certains angles à 90° lorsque la norme sur les axes de calcul est proche de zéro. Le document brevet US 2004/0187328 propose pour résoudre le problème de blocage cardan de figer une valeur d'angle par défaut. Ce choix arbitraire peut conduire à des valeurs de cap erronées.

Le document US 2013/0185018 décrit un appareil et une méthode pour estimer un angle de lacet d'un dispositif dans un système de référence gravitationnel et pour déterminer des paramètres utilisés pour extraire un champ magnétique statique corrigé pour obtenir des champs dynamiques proches, en utilisant des mesures d'un capteur magnétique et d'autres capteurs de mouvement. En particulier, des paramètres sont déterminés, au moins en partie de manière analytique, pour pouvoir convertir des signaux de mesure détectés par le capteur magnétique en un champ magnétique local, en corrigeant notamment un offset du capteur magnétique, l'échelle utilisée, des effets liés à la présence de fer doux et/ou de fer dur, et des déviations d'alignement.

Résumé de l'invention

L'invention a pour objectif de pallier au moins un des inconvénients de l'état de la technique susmentionné. Plus particulièrement, l'invention a pour objectif de réduire la sensibilité au bruit d'un instrument de navigation. A cet effet, la présente invention concerne un instrument de navigation comprenant : - Un premier capteur configuré pour mesurer trois composantes d'un premier vecteur, dit premier vecteur mesuré, d'un premier champ de force terrestre dans un référentiel lié audit instrument de navigation, dit référentiel embarqué, et générer des premiers signaux de sortie représentatifs desdites trois composantes ; - Une unité de calcul d'angles d'orientation de l'instrument de navigation, cette unité de calcul étant connectée audit premier capteur pour recevoir lesdits premiers signaux de sortie et étant configurée pour pouvoir calculer un premier angle d'orientation et un deuxième angle d'orientation du référentiel embarqué, et ainsi de l'instrument de navigation, par rapport à un référentiel terrestre, ces premier et deuxième angles d'orientation étant définis par deux rotations successives que doit subir le premier vecteur mesuré, autour d'un premier axe de rotation de référence (aussi nommé premier axe de référence) du référentiel embarqué pour le premier angle d'orientation et d'un deuxième axe de rotation de référence (aussi nommé deuxième axe de référence) du référentiel embarqué pour le deuxième angle d'orientation, pour aligner ce premier vecteur mesuré sur un vecteur de calcul ayant, dans le référentiel embarqué, trois composantes de calcul qui sont identiques à trois composantes de référence, dans le référentiel terrestre, d'un premier

2

vecteur de référence qui est prédéfini ou prédéterminé dans le référentiel terrestre. Cet instrument de navigation est remarquable en ce que l'unité de calcul d'angles d'orientation est configurée pour pouvoir déterminer les premier et deuxième angles d'orientation selon un ordre donné desdites deux rotations successives et également selon un ordre inverse ; et en ce que l'unité de calcul est agencée pour pouvoir choisir entre ledit ordre donné et ledit ordre inverse, pour calculer les premier et deuxième angles d'orientation, en fonction d'une comparaison entre un indicateur d'un risque d'erreur, quantifiant un risque d'instabilité de l'unité de calcul lors de la détermination des premier et deuxième angles d'orientation, et un seuil prédéterminé, ledit indicateur du risque d'erreur étant déterminé par l'instrument de navigation en fonction d'au moins deux desdits premiers signaux de sortie.

Selon des modes avantageux de l'invention, l'instrument de navigation comprend une ou plusieurs des caractéristiques techniques suivantes, selon toutes combinaisons possibles :

- L'indicateur du risque d'erreur est la norme de la projection du premier vecteur mesuré dans un plan perpendiculaire au premier axe de rotation de référence ; et l'unité de calcul d'angles d'orientation est configurée pour déterminer premièrement le premier angle d'orientation, en effectuant parmi lesdites deux rotations successives premièrement la rotation du premier vecteur mesuré autour du premier axe de rotation de référence, lorsque l'indicateur du risque d'erreur est supérieur audit seuil prédéterminé.

- La valeur du seuil prédéterminé est comprise entre 0,15 et 0,45 de la norme du premier vecteur mesuré, de préférence entre 0,20 et 0,30 de cette norme.

- Alternativement, l'indicateur du risque d'erreur est la valeur absolue du deuxième angle d'orientation lorsque le premier angle d'orientation est calculé avant le deuxième angle d'orientation ; et l'unité de calcul d'angles d'orientation est configurée pour déterminer à nouveau les premier et deuxième angles d'orientation en calculant premièrement le deuxième angle d'orientation, en effectuant premièrement parmi lesdites deux rotations successives la rotation du premier vecteur mesuré autour du deuxième axe de rotation de référence, lorsque l'indicateur du risque d'erreur est supérieur au seuil prédéterminé, l'unité de calcul conservant alors les valeurs des premier et deuxième angles d'orientation à nouveau déterminées pour ces premier et deuxième angles d'orientation.

- Dans l'alternative précédente, la valeur du seuil prédéterminé est comprise entre 65° et 80°, de préférence entre 70° et 75°.

- Un axe prédéfini du référentiel terrestre est aligné avec le premier vecteur de référence, de préférence ce premier vecteur de référence étant aligné avec un axe vertical $\vec{1_z}$ du référentiel terrestre.

- Le premier axe de rotation de référence correspond à un axe $\vec{1_{x'}}$ dans le référentiel embarqué et le deuxième axe de rotation de référence correspond à un axe $\vec{1_{y'}}$ dans le référentiel embarqué, ces premier et deuxième axes de rotation de référence étant perpendiculaires.

- L'instrument de navigation comporte un deuxième capteur configuré pour mesurer les trois composantes d'un deuxième vecteur, dit deuxième vecteur mesuré, d'un deuxième champ de force terrestre dans le référentiel embarqué, ce deuxième vecteur mesuré étant non colinéaire au premier vecteur mesuré, et pour générer des deuxièmes signaux de sortie représentatifs de ces trois composantes ; l'instrument de navigation comprenant en outre une unité de détermination d'un troisième angle d'orientation de cet instrument relativement au référentiel terrestre, cette unité de détermination étant connectée au deuxième capteur pour recevoir les deuxièmes signaux de sortie et étant configurée pour déterminer le troisième angle d'orientation à partir des premier et deuxième angles d'orientation calculés et du deuxième vecteur mesuré.

- L'unité de calcul et l'unité de détermination du troisième angle d'orientation sont formées par une seule et même unité électronique qui forme elle-même une unité de traitement centrale.

- Le troisième angle d'orientation est défini par une rotation que doit subir le deuxième vecteur mesuré, après avoir été réorienté dans le référentiel embarqué par une application à ce deuxième vecteur mesuré des première et deuxième rotations successives, autour d'un troisième axe de rotation de référence (aussi nommé troisième axe de référence), perpendiculaire aux premier et deuxième axes de rotation de référence (et correspondant donc à un axe $\vec{1_{z'}}$ dans le référentiel embarqué), pour que ce deuxième vecteur mesuré et réorienté, dit deuxième vecteur réorienté, soit situé dans un premier plan de référence du référentiel embarqué comprenant les premier et troisième axes de rotation de référence.

- Le troisième angle d'orientation est déterminé en appliquant premièrement au deuxième vecteur mesuré les première et deuxième rotations successives, de préférence dans l'ordre choisi entre ledit ordre donné et ledit ordre inverse pour définir les premier et deuxième angles d'orientation, de sorte à obtenir le deuxième vecteur réorienté, puis en calculant l'angle entre une projection, dans un deuxième plan de référence comprenant les premier et deuxième axes de référence, du deuxième vecteur réorienté et le premier axe de référence.
- Le troisième angle d'orientation est considéré comme un cap de cet instrument.
- Le premier vecteur mesuré est un vecteur du champ de force gravitationnel terrestre.
- Le premier vecteur mesuré est déterminé au moyen d'un accéléromètre formant le premier capteur.
- Le deuxième vecteur mesuré est un vecteur du champ magnétique terrestre, ce deuxième vecteur mesuré étant déterminé au moyen d'un capteur magnétique formant le deuxième capteur.
- Alternativement, le premier vecteur mesuré est un vecteur du champ magnétique terrestre, le premier vecteur mesuré étant déterminé au moyen d'un capteur magnétique formant le premier capteur.
- Dans l'alternative précédente, lesdites trois composantes de référence sont prédéterminées à partir de données provenant d'un dispositif de localisation de l'instrument de navigation, notamment du type GPS.
- Dans l'alternative susmentionnée, le deuxième vecteur mesuré est un vecteur du champ de force gravitationnel terrestre ; le deuxième vecteur mesuré étant déterminé au moyen d'un accéléromètre qui forme le deuxième capteur.
- L'instrument de navigation est une boussole électronique qui comprend un indicateur du Nord magnétique ou du Nord géographique et un dispositif de commande de cet indicateur, lesquels sont agencés pour commander l'indicateur de sorte qu'il présente un angle relativement au premier axe de référence qui soit égal à l'opposé du troisième angle d'orientation, de préférence corrigé de la déviation du champ magnétique terrestre à l'endroit où est situé l'instrument de navigation pour l'indication du Nord magnétique et, pour l'indication du Nord géographique, en sus de la déclinaison du champ magnétique terrestre.
- L'instrument de navigation comprend un moyen d'affichage de données indiquant le cap vrai, ladite unité de calcul étant configurée pour calculer le cap vrai en fonction dudit cap, d'un premier paramètre quantifiant la déclinaison du champ magnétique terrestre et d'un deuxième paramètre quantifiant la déviation du champ magnétique terrestre à l'endroit où est situé l'instrument de navigation.

L'invention se rapporte aussi à un dispositif portable muni de l'instrument de navigation. De manière avantageuse, le dispositif portable selon l'invention, en particulier une montre bracelet, est remarquable en ce que ce dispositif est portable au poignet d'un utilisateur ; et en ce que le premier axe de référence correspond à l'axe 6-12 heures et le deuxième axe de référence correspond à l'axe 9-3 heures (selon un affichage analogique classique de l'heure dans une montre, l'axe 6-12 heures étant aligné sur l'axe longitudinal du bracelet de la montre).

L'invention concerne aussi une méthode de détermination d'angles d'orientation, dont au moins un premier et un deuxième angles d'orientation, d'un instrument de navigation par rapport à un référentiel terrestre, cette méthode comprenant les étapes suivantes :

- acquisition des trois composantes d'un premier vecteur, dit premier vecteur mesuré, d'un premier champ de force terrestre dans un référentiel lié audit instrument de navigation, dit référentiel embarqué ;
- détermination des premier et deuxième angles d'orientation du référentiel embarqué par rapport au référentiel terrestre, ces premier et

deuxième angles d'orientation étant définis par deux rotations successives du premier vecteur mesuré, autour d'un premier axe de rotation de référence du référentiel embarqué pour le premier angle d'orientation et d'un deuxième axe de rotation de référence du référentiel embarqué pour le deuxième angle d'orientation, permettant d'aligner le premier vecteur mesuré sur un vecteur de calcul ayant, dans le référentiel embarqué, trois composantes de calcul qui sont identiques à trois composantes de référence, dans le référentiel terrestre, d'un premier vecteur de référence qui est prédéfini ou prédéterminé dans le référentiel terrestre ;
la détermination des premier et deuxième angles d'orientation comprenant une étape de choix entre un ordre donné pour les deux rotations successives et un ordre inverse ; le choix entre ledit ordre donné et ledit ordre inverse, pour calculer les premier et deuxième angles d'orientation, étant en fonction d'une comparaison entre un indicateur d'un risque d'erreur, quantifiant un risque d'instabilité lors de la détermination des premier et deuxième angles d'orientation, et un seuil prédéterminé, l'indicateur du risque d'erreur étant déterminé en fonction d'au moins deux desdites composantes du premier vecteur mesuré.

Selon des modes avantageux de l'invention, la méthode de détermination d'angles d'orientation comprend une ou plusieurs des caractéristiques et/ou étapes suivantes, selon toutes combinaisons possibles :

- L'indicateur du risque d'erreur est la norme de la projection du premier vecteur mesuré dans un plan perpendiculaire au premier axe de rotation de référence, et le premier angle d'orientation est calculé en effectuant, parmi lesdites deux rotations successives, premièrement la rotation du premier vecteur mesuré autour du premier axe de rotation de référence lorsque l'indicateur du risque d'erreur est supérieur audit seuil prédéterminé.
- La valeur du seuil prédéterminé est comprise entre 0,15 et 0,45 de la norme du premier vecteur mesuré, de préférence entre 0,20 et 0,30 de cette norme.

- Alternativement, l'indicateur du risque d'erreur est la valeur angulaire absolue du deuxième angle d'orientation lorsque le premier angle d'orientation est calculé, selon ledit ordre donné, avant le deuxième angle d'orientation, et le deuxième angle d'orientation est calculé en effectuant, parmi lesdites deux rotations successives, premièrement la rotation du premier vecteur mesuré autour du deuxième axe de rotation de référence lorsque l'indicateur du risque d'erreur est supérieur audit seuil prédéterminé.

- Dans l'alternative précédente, la valeur du seuil prédéterminé est comprise entre 65° et 80°, de préférence entre 70° et 75°.

- Un axe prédéfini du référentiel terrestre est aligné avec le premier vecteur de référence, de préférence ce premier vecteur de référence étant aligné avec un axe vertical $\overrightarrow{1_z}$ du référentiel terrestre.

- Le premier angle d'orientation et le deuxième angle d'orientation sont respectivement un angle de roulis et un angle de tangage, l'angle de roulis étant associé à une rotation autour du premier axe de référence, correspondant à l'axe $\overrightarrow{1_{x'}}$ dans le référentiel embaqué lorsque l'angle de roulis est déterminé en premier, et l'angle de tangage étant associé à une rotation autour du deuxième axe de référence, correspondant à l'axe $\overrightarrow{1_{y'}}$ dans le référentiel embaqué lorsque l'angle de tangage est déterminé en premier.

- La méthode comprend en outre une étape d'acquisition de trois composantes d'un deuxième vecteur, dit deuxième vecteur mesuré, d'un deuxième champ de force terrestre dans le référentiel embarqué, et une étape de détermination d'un troisième angle d'orientation à partir des premier et deuxième angles d'orientation calculés et des trois composantes du deuxième vecteur mesuré.

- Le troisième angle d'orientation est déterminé en appliquant premièrement au deuxième vecteur mesuré lesdites première et deuxième rotations successives, de préférence dans l'ordre choisi entre ledit ordre donné et ledit ordre inverse, pour obtenir un deuxième vecteur mesuré et réorienté, dit deuxième vecteur réorienté, dans le référentiel embarqué, puis en définissant le troisième angle d'orientation comme l'angle entre une projection du deuxième vecteur réorienté, dans un plan de référence comprenant les premier et deuxième axes de référence, et le premier axe de référence.

- Le troisième angle d'orientation est un angle de lacet de cet instrument, cet angle de lacet étant défini par une rotation de l'instrument de navigation autour d'un troisième axe de rotation de référence, correspondant à un axe vertical $\overrightarrow{1_z}$ dans le référentiel terrestre, après corrections du roulis et du tangage.

- Le troisième angle d'orientation est considéré comme un cap de l'instrument de navigation.

- Le premier vecteur mesuré est un vecteur du champ de force gravitationnel terrestre, lequel est mesuré au moyen d'un accéléromètre.

- Le deuxième vecteur d'un deuxième champ de force terrestre est un vecteur du champ magnétique terrestre, lequel est mesuré au moyen d'un capteur magnétique.

- Alternativement, le premier vecteur mesuré est un vecteur du champ magnétique terrestre, le premier vecteur mesuré étant déterminé au moyen d'un capteur magnétique.

- Dans l'alternative précédente, le deuxième vecteur d'un deuxième champ de force terrestre est un vecteur du champ de force gravitationnel terrestre, le deuxième vecteur mesuré étant déterminé au moyen d'un accéléromètre.

- Dans l'alternative susmentionnée, les trois composantes de référence sont déterminées à partir de données provenant d'un dispositif de localisation de l'instrument de navigation, notamment du type GPS.

- L'instrument de navigation est une boussole électronique.

- L'instrument de navigation comprend un moyen d'affichage de données indiquant le cap vrai ; et la méthode comprend en outre une étape de détermination du cap vrai en fonction dudit cap déterminé dans une des étapes précédentes, d'un premier paramètre quantifiant la déclinaison et d'un deuxième paramètre quantifiant la déviation du champ magnétique terrestre à l'endroit où est situé l'instrument de navigation.

- L'instrument de navigation est configuré pour être monté sur ou intégré dans un dispositif portable.

- Le dispositif portable, en particulier une montre bracelet, est portable au poignet d'un utilisateur, le premier axe de référence correspondant à l'axe 6-12 heures d'un affichage analogique classique de l'heure par une montre et le deuxième axe de référence correspondant à l'axe 9-3 heures.

L'invention concerne également un programme comprenant des instructions qui, lorsque le programme est exécuté par un ordinateur, conduisent cet ordinateur à mettre en œuvre les étapes de la méthode selon l'invention.

L'invention se rapporte en outre à un support d'enregistrement, lisible par ordinateur, comprenant des instructions qui, lorsqu'elles sont exécutées par un ordinateur, conduisent ce dernier à mettre en œuvre les étapes de la méthode selon l'invention.

Les mesures de l'invention sont avantageuses car, d'un point de vue mathématique, la démarche reste la même quel que soit l'angle calculé en priorité. Cependant, le résultat donne un cap qui peut être très différent, selon que les deux rotations successives sont effectuées dans l'ordre donné ou dans l'ordre inverse, notamment dans le cas où les deux angles sont grands (typiquement si le roulis et le tangage valent 45°). On sait néanmoins que pour des questions de confort, l'utilisateur utilisera généralement la montre avec un roulis proche de 0° et un tangage qui peut varier fortement, notamment entre -30° et 70°. Dans ces conditions, le cap mesuré par notre proposition permet ne plus souffrir de l'effet de blocage cardan. De surcroît, la méthode permet de déterminer l'incertitude associée à une mesure et garantit une stabilité numérique. Enfin, les mesures de l'invention sont plus précises que celles obtenues par les dispositifs ou systèmes dans l'art antérieur, puisque même lorsque le tangage est proche de 90°, une estimation de cet angle est effectuée. Dans l'état de l'art, dans la même situation, au mieux une valeur par défaut est assignée au tangage.

Brève description des figures

L'invention sera décrite ci-après de manière plus détaillée à l'aide des dessins annexés, donnés à titre d'exemples nullement limitatifs, dans lesquels :

- La Figure 1 représente une montre bracelet dans laquelle un instrument de navigation, notamment une boussole électronique est montée, cette Figure 1 comprenant une vue frontale de la montre bracelet à gauche et une vue simplifiée en perspective de cette montre à droite ;

- La Figure 2 illustre un référentiel embarqué lié à la montre bracelet et un référentiel terrestre ;

- La Figure 3 montre une succession de trois rotations que devrait subir un référentiel terrestre afin qu'il vienne coïncider avec le référentiel embarqué d'un instrument de navigation ;

- La Figure 4a illustre une projection d'un vecteur du champ gravitationnel terrestre dans un plan perpendiculaire à l'axe $\overrightarrow{1_{x\prime}}$ du référentiel embarqué, définissant un angle de roulis ;

- La Figure 4b montre une première rotation et une deuxième rotation du vecteur du champ gravitationnel terrestre de façon à le faire coïncider avec un vecteur de calcul dont les composantes sont proportionnelles à celles du champ gravitationnel terrestre dans le référentiel terrestre ;

- La Figure 5 comprend deux graphiques illustrant l'effet du bruit de mesure sur le calcul de l'angle de roulis ;

- La Figure 6 montre une zone d'arbitrage entre l'ordre donné et l'ordre inverse pour deux rotations successives relatives au roulis et au tangage de l'instrument de navigation ;

- Les Figures 7a à 7c représentent une série de graphiques comparant les valeurs de cap en fonction de la valeur de tangage pour divers angles de roulis donnés avec l'ordre donné et l'ordre inverse pour les deux rotations liées au roulis et au tangage ; et

- La Figure 8 représente schématiquement un objet portable du type électronique incorporant une boussole électronique selon l'invention.

Description détaillée de l'invention

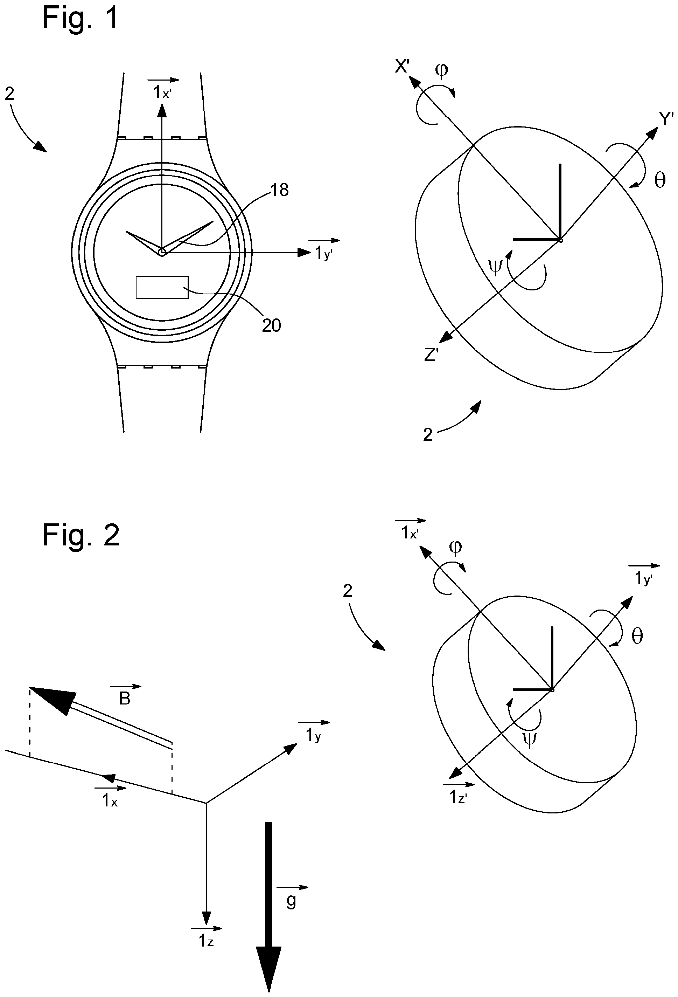

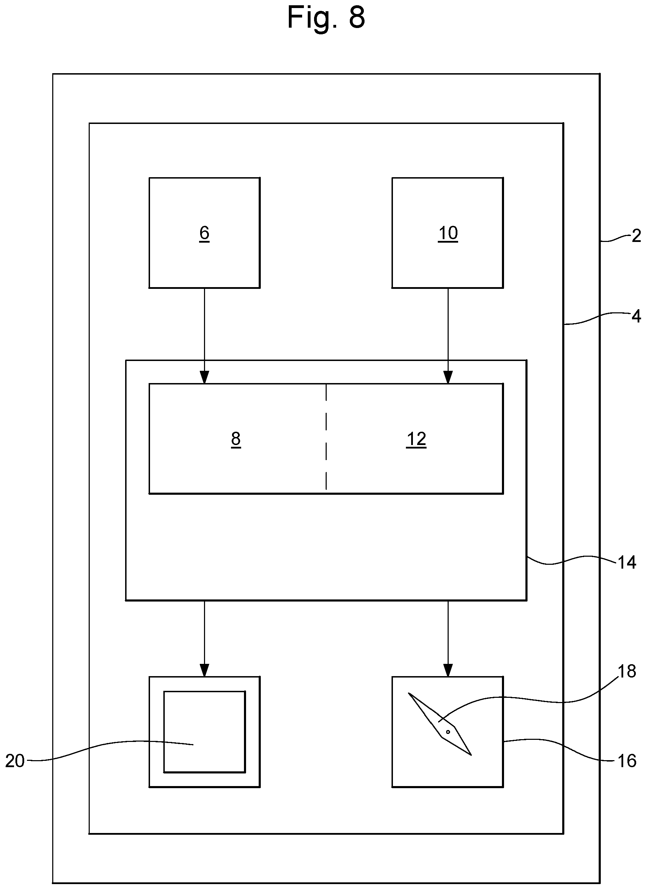

La Figure 1 représente un premier mode de réalisation de l'invention dans lequel l'instrument de navigation 4 (représenté à la Fig.8) est une boussole électronique incorporée dans une montre bracelet 2 qui est représentée en vue frontale à gauche et en perspective à droite (représentation schématique sans le bracelet qui sera reprise dans les d'autres figures). L'instrument de navigation comprend une unité 8 de calcul d'angles d'orientation de la montre bracelet qui est incorporée dans ou formée par une unité électronique centrale (voir Fig.8). Un référentiel $\overrightarrow{1_{x\prime}}$ ; $\overrightarrow{1_{y\prime}}$ ; $\overrightarrow{1_{z\prime}}$ lié à l'instrument de navigation est représenté dans la Fig.1. Ce référentiel est aussi dénommé référentiel embarqué. Même si le référentiel embarqué est lié à l'instrument de navigation, il peut être défini avec des caractéristiques de la montre bracelet 2 dans laquelle l'instrument de navigation est fixé rigidement. En conséquence, de manière avantageuse, le référentiel embarqué peut donc être défini avec l'axe $\overrightarrow{1_{x\prime}}$ et l'axe $\overrightarrow{1_{y\prime}}$ alignés en sens et direction avec l'axe 6h-12h et l'axe 9h-3h de la montre bracelet 2, définissant le plan général de l'affichage digital ou l'affichage analogique (à savoir du cadran principal) de cette montre bracelet 2. L'axe $\overrightarrow{1_{z'}}$ est choisi de façon à être perpendiculaire et de préférence dextrogyre par rapport aux axes $\overrightarrow{1_{x'}}$ $\overrightarrow{1_{y'}}$ et il est donc dirigé vers le fond de la montre bracelet depuis ledit plan général de l'affichage.

Le référentiel embarqué permet de déterminer l'orientation de l'instrument de navigation par rapport à un référentiel terrestre prédéfini comme illustré en Figure 2. Cette orientation de la montre bracelet 2 peut varier de manière significative lorsque la montre est portée par un utilisateur et que ce dernier change la position du poignet auquel il porte cette montre bracelet. On remarquera que le choix d'un référentiel embarqué $\overrightarrow{1_{x'}}$ ; $\overrightarrow{1_{y'}}$ ; $\overrightarrow{1_{z'}}$ tout comme celui d'un référentiel terrestre $\overrightarrow{1_x}$ ; $\overrightarrow{1_y}$ ; $\overrightarrow{1_z}$ est arbitraire. Ce choix est essentiellement lié à des conventions d'utilisation et/ou à l'usage prévu pour l'instrument de navigation. Par exemple, le référentiel terrestre est défini avec un axe $\overrightarrow{1_z}$ orienté selon la direction verticale de haut en bas (selon l'orientation NED, sigle de North East Down en anglais), de façon à ce que l'axe $\overrightarrow{1_z}$ soit aligné en sens et direction avec le champ de gravité local (au niveau de l'instrument de navigation). Le champ de gravité local est caractérisé par un vecteur de référence de champ gravitationnel terrestre, représenté par le vecteur $\overrightarrow{g_{ref}}$. L'axe $\overrightarrow{1_x}$ du référentiel est orienté en fonction de la direction du pôle nord magnétique ou géographique, comme illustré en Figure 2. De préférence, l'axe $\overrightarrow{1_x}$ résulte de la projection d'un vecteur du champ magnétique terrestre de référence dans un plan perpendiculaire au vecteur $\overrightarrow{g_{ref}}$, le vecteur du champ magnétique terrestre pointant vers nord magnétique, ledit vecteur étant représenté par le vecteur $\overrightarrow{B_{ref}}$. Dans la plupart des régions habitées à la surface du globe terrestre, le vecteur $\overrightarrow{B_{ref}}$ est sensiblement perpendiculaire au vecteur $\overrightarrow{g_{ref}}$ et par conséquent l'axe $\overrightarrow{1_x}$ est sensiblement colinéaire avec le vecteur $\overrightarrow{B_{ref}}$. Le troisième axe $\overrightarrow{1_y}$ est défini de façon à être perpendiculaire et dextrogyre par rapport aux axes $\overrightarrow{1_x}$ et $\overrightarrow{1_z}$. La définition du référentiel ne se limite pas à l'exemple susmentionné. Par exemple l'axe $\overrightarrow{1_x}$ aurait pu être aligné avec le vecteur $\overrightarrow{B_{ref}}$ et l'axe $\overrightarrow{1_z}$ aurait pu être obtenu à partir de la projection du vecteur $\overrightarrow{g_{ref}}$ dans un plan perpendiculaire à l'axe $\overrightarrow{1_x}$. L'orientation de l'axe $\overrightarrow{1_z}$ aurait pu aussi être de bas en haut.

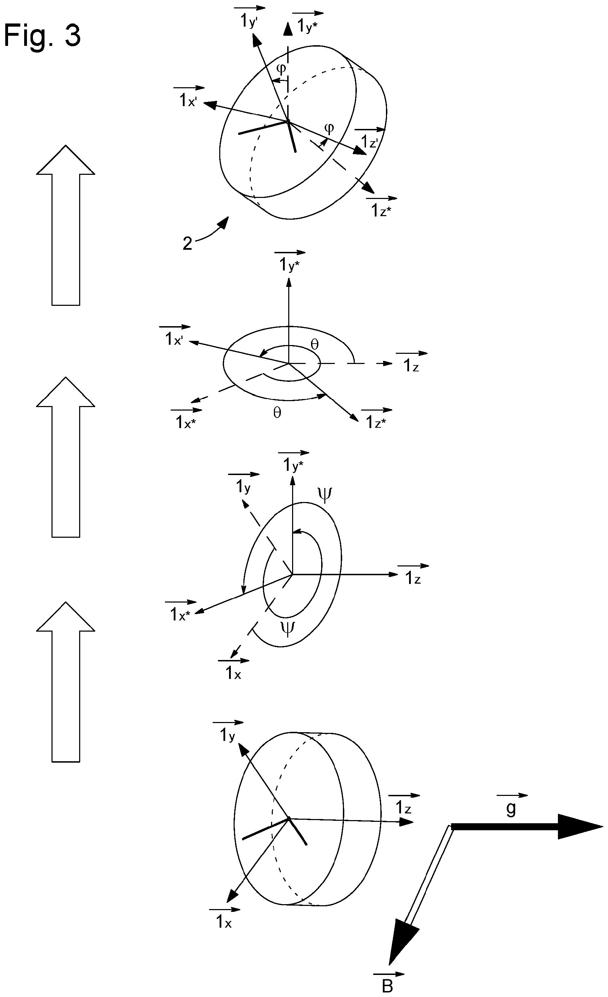

L'orientation du référentiel embarqué par rapport au référentiel terrestre peut être définie par une succession de trois rotations définies par trois angles d'orientation caractérisant le mouvement que devrait subir le référentiel terrestre afin qu'il vienne se confondre avec le référentiel embarqué, comme illustré en Figure 3.

De manière connue, l'orientation du référentiel embarqué par rapport au référentiel terrestre est définie par trois angles de référence nommés lacet - tangage - roulis. Ces angles sont couramment utilisés notamment dans l'aéronautique. L'invention n'est cependant pas limitée à ce choix d'angles car il existe d'autres conventions comme les angles d'Euler qui sont utilisés dans d'autres domaines techniques dans lesquels la présente invention est aussi applicable.

La première rotation dite de lacet s'effectue autour de l'axe $\overrightarrow{1_z}$ avec une amplitude $\psi$. Cette première rotation permet de déterminer l'amplitude du mouvement de lacet de la montre bracelet 2 (et par conséquent de l'instrument de navigation, en particulier de la boussole électronique). Cette amplitude correspond aussi au cap de la montre bracelet 2 et donc de la boussole électronique. Dans un cas particulier où la montre bracelet 2 est positionnée de sorte que le plan de l'affichage de la montre bracelet 2 est perpendiculaire au champ $\overrightarrow{g_{ref}}$ et donc à l'axe $\overrightarrow{1_z}$, la rotation de lacet indique directement le cap de l'instrument de navigation. En effet, la détermination du cap de l'instrument de navigation, et donc de la montre bracelet 2, s'opère en comparant l'orientation de la montre bracelet 2 réelle par rapport à un positionnement fictif dans lequel l'axe 6h-12h de la montre bracelet 2 serait aligné avec l'axe $\overrightarrow{1_x}$, impliquant que l'axe 6h-12h est calé avec le vecteur du champ magnétique terrestre $\overrightarrow{B_{ref}}$. La détermination de l'angle de lacet et donc du cap s'effectue, de manière avantageuse, à partir de calculs trigonométriques sur les coordonnées d'un vecteur du champ magnétique terrestre mesuré $\overrightarrow{B'_{mes}}$. Ces coordonnées sont déterminées au moyens d'un capteur magnétique 10 disposé dans la boussole électronique 4 (voir Fig.8). Les coordonnées $B'_{x,mes}$, $B'_{y,mes}$, $B'_{z,mes}$ du vecteur du champ magnétique terrestre $\overrightarrow{B'_{mes}}$ sont exprimées dans le repère / référentiel embarqué.

La deuxième rotation, dite de tangage, s'effectue autour de l'axe $\overrightarrow{1_{y*}}$ du référentiel obtenu après la rotation de lacet. L'axe $\overrightarrow{1_{y*}}$ correspond à l'axe $\overrightarrow{1_y}$ du référentiel terrestre ayant subi la rotation de lacet. L'amplitude du tangage est symbolisée par la lettre grecque θ. Dans le cadre de l'utilisation d'une montre bracelet 2, le tangage se rapproche, d'une manière générale, au mouvement de rotation de l'avant-bras qu'effectue une personne pour regarder l'heure sur l'affichage de la montre bracelet 2 qu'il porte.

La troisième rotation, dite de roulis, s'effectue autour de l'axe $\overrightarrow{1_{x*}}$, qui correspond à l'axe $\overrightarrow{1_x}$ dans le référentiel embarqué. L'amplitude du roulis est symbolisée par la lettre grecque ϕ. Dans le cadre de l'utilisation d'une montre bracelet 2, le roulis se rapproche, d'une manière générale, au mouvement de rotation de l'avant-bras par rapport à l'horizontale.

La détermination des deux angles de roulis et de tangage peut être réalisée en comparant la position de la montre bracelet 2 portée par l'utilisateur à une position virtuelle dans laquelle le plan de l'affichage de la montre bracelet 2 serait à plat (c'est-à-dire horizontal) et donc perpendiculaire à l'axe vertical $\overrightarrow{1_z}$. Pour déterminer ces deux angles, la boussole électronique comporte un capteur 6 (voir Fig.8) qui permet de mesurer le vecteur du champ gravitationnel terrestre dans le repère embarqué (lié à la montre), représenté par $\overrightarrow{g'_{mes}}$. Sur la base de la mesure des composantes $g'_{x,mes}$, $g'_{y,mes}$, $g'_{z,mes}$ du vecteur $\overrightarrow{g'_{mes}}$ dans le référentiel embarqué de la montre bracelet 2 à laquelle la boussole magnétique 4 est rigidement fixée, les angles de tangage et roulis peuvent être aisément déduits à partir de calculs trigonométriques, comme exposé par la suite.

Avec la connaissance des amplitudes des trois rotations décrites ci-avant il est possible, comme illustré en Figure 3, d'amener de manière virtuelle par exemple une montre bracelet 2 d'une position virtuelle initiale dans laquelle elle occupe une position de référence dans le référentiel terrestre à une position réelle finale, lorsqu'elle est portée par l'utilisateur. Dans la position virtuelle initiale, l'axe 6h-12h de la montre bracelet 2 est aligné avec l'axe $\overrightarrow{1_x}$ et le plan général de l'affichage (formé par l'axe 6h-12h et l'axe 9h-3h) est perpendiculaire à l'axe vertical $\overrightarrow{1_z}$. Comme indiqué précédemment, l'angle de lacet déterminé au cours de la première rotation permet de déterminer le cap de la montre bracelet 2. Les deuxième et troisième angles de rotation permettent de déterminer l'angle de tangage et l'ange de roulis de la montre bracelet.

Le référentiel embarqué par rapport au référentiel terrestre peut donc être défini par une transformation de référentiel pour décrire un mouvement de « solide », dans laquelle les 3 angles d'orientation, à savoir lacet, tangage et roulis, définissent ensemble les déplacements angulaires des axes du référentiel terrestre ($\overrightarrow{1_x}$ ; $\overrightarrow{1_y}$ ; $\overrightarrow{1_z}$) de façon à les faire coïncider avec les axes correspondants du référentiel embarqué ($\overrightarrow{1_{x'}}$ ; $\overrightarrow{1_{y'}}$ ; $\overrightarrow{1_{z'}}$). Cette transformation de référentiel correspond, pour un point (x, y, z) dans le référentiel terrestre, à un changement de coordonnées qui est exprimé par le produit matriciel donné à l'équation 1 ci-dessous, cette équation 1 fournissant les coordonnées (x', y', z') de ce point dans le référentiel embarqué.

$$\begin{pmatrix} x' \\ y' \\ z' \end{pmatrix} = R_\varphi^{-1} \cdot R_\theta^{-1} \cdot R_\psi^{-1} \begin{pmatrix} x \\ y \\ z \end{pmatrix} \qquad \text{Equation 1}$$

avec

$$R_{\varphi} = \begin{pmatrix} 1 & 0 & 0 \\ 0 & \cos\varphi & -\sin\varphi \\ 0 & \sin\varphi & \cos\varphi \end{pmatrix} \quad \text{et } R_{\varphi}^{-1} = R_{\varphi}^{T}$$

$$R_{\theta} = \begin{pmatrix} \cos\theta & 0 & \sin\theta \\ 0 & 1 & 0 \\ -\sin\theta & 0 & \cos\theta \end{pmatrix} \quad \text{et } R_{\theta}^{-1} = R_{\theta}^{T}$$

$$R_{\psi} = \begin{pmatrix} \cos\psi & -\sin\psi & 0 \\ \sin\psi & \cos\psi & 0 \\ 0 & 0 & 1 \end{pmatrix} \quad \text{et } R_{\psi}^{-1} = R_{\psi}^{T}$$

où $R_{\varphi}^{T}$, $R_{\theta}^{T}$, $R_{\psi}^{T}$ sont les matrices transposées de $R_{\varphi}$, $R_{\theta}$ et $R_{\psi}$.

Comme la boussole électronique est incorporée dans la montre bracelet et que, pour cette boussole électronique, seul le référentiel embarqué est initialement défini et connu, et comme la méthode prévue consiste à ramener virtuellement le référentiel embarqué en coïncidence avec le référentiel terrestre pour déterminer les angles d'orientation du dispositif portable qu'est la montre bracelet, en particulier un cap de ce dispositif portable, on s'intéresse alors à la transformation de référentiel inverse à celle décrite ci-avant. Partant d'un vecteur ou plusieurs vecteurs ayant des coordonnées (x', y', z') dans le référentiel embarqué (les vecteurs ayant leur origine au point (0,0,0) dans le référentiel embarqué et également dans le référentiel terrestre), on cherche à déterminer les coordonnées (x, y, z) de ce ou ces vecteur(s) dans le référentiel terrestre. Sur la base de l'équation 1 donnée précédemment, la relation mathématique, sous forme matricielle, entre un vecteur (x', y', z') exprimé dans le référentiel embarqué et ce même vecteur (x, y, z) exprimé dans le référentiel terrestre est donné par l'équation 2 ci-dessous. Cette propriété sera exploitée dans la suite de la description de l'invention pour le calcul des angles d'orientation du dispositif portable incorporant la boussole électronique. La relation matricielle de l'équation 2 définit une matrice de passage permettant, pour un point ou un vecteur, de passer du référentiel embarqué au référentiel terrestre (c'est-à-dire pour l'expression de ses coordonnées).

$$\begin{pmatrix} x \\ y \\ z \end{pmatrix} = R_{\psi} \cdot R_{\theta} \cdot R_{\varphi} \begin{pmatrix} x' \\ y' \\ z' \end{pmatrix} \qquad \text{Equation 2}$$

Etant donné que les coordonnées d'un point peuvent définir l'extrémité d'un vecteur dont l'origine coïncide avec l'origine commune des référentiels embarqué et terrestre, comme indiqué précédemment, l'équation 2 permet ainsi d'établir une relation entre le vecteur mesuré $\overrightarrow{g'_{mes}}$ défini dans le référentiel embarqué et le même vecteur $\overrightarrow{g_{mes}}$ défini dans le référentiel terrestre. Cette relation est la suivante :

$$\begin{pmatrix} g_{x,mes} \\ g_{y,mes} \\ g_{z,mes} \end{pmatrix} = R_{\psi} \cdot R_{\theta} \cdot R_{\varphi} \begin{pmatrix} g'_{x,mes} \\ g'_{y,mes} \\ g'_{z,mes} \end{pmatrix} \qquad \text{Equation 3}$$

Egalement, la relation entre le vecteur mesuré $\overrightarrow{B'_{mes}}$ défini dans le référentiel embarqué et le même vecteur $\overrightarrow{B_{mes}}$ défini dans le référentiel terrestre est la suivante :

$$\begin{pmatrix} B_{x,mes} \\ B_{y,mes} \\ B_{z,mes} \end{pmatrix} = R_{\psi} \cdot R_{\theta} \cdot R_{\varphi} \begin{pmatrix} B'_{x,mes} \\ B'_{y,mes} \\ B'_{z,mes} \end{pmatrix} \qquad \text{Equation 4}$$

Or, le calcul des angles d'orientation part de l'hypothèse que les vecteurs mesurés $\overrightarrow{g'_{mes}}$, $\overrightarrow{B'_{mes}}$ dans le référentiel embarqué sont colinéaires avec des vecteurs de référence $\overrightarrow{g_{ref}}$, $\overrightarrow{B_{ref}}$ qui leur correspondent et dont les composantes dans le référentiel terrestre sont prédéfinies ou prédéterminées. Grâce aux équations 3 et 4, il possible de déterminer les composantes de chacun des vecteurs mesurés $\overrightarrow{g'_{mes}}$, $\overrightarrow{B'_{mes}}$ dans le référentiel terrestre, comme suit :

$$\begin{pmatrix} g_{x,ref} \\ g_{x,ref} \\ g_{z,ref} \end{pmatrix} = k1 \cdot \begin{pmatrix} g_{x,mes} \\ g_{x,mes} \\ g_{z,mes} \end{pmatrix} = k1 \cdot R_\psi \cdot R_\theta \cdot R_\varphi \begin{pmatrix} g'_{x,mes} \\ g'_{y,mes} \\ g'_{z,mes} \end{pmatrix}$$

$$\begin{pmatrix} B_{x,ref} \\ B_{y,ref} \\ B_{z,ref} \end{pmatrix} = k2 \cdot \begin{pmatrix} B_{x,mes} \\ B_{y,mes} \\ B_{z,mes} \end{pmatrix} = k2 \cdot R_\psi \cdot R_\theta \cdot R_\varphi \begin{pmatrix} B'_{x,mes} \\ B'_{y,mes} \\ B'_{z,mes} \end{pmatrix}$$

<div align="center">Equations 5a et 5b</div>

Il est donc possible de calculer les angles d'orientation en résolvant les équations 5a et 5b. Toutefois, cette approche pour trouver les angles d'orientations est loin d'être avantageuse en toute circonstance, car il peut y avoir des solutions singulières (par ex. blocage cardan). Pour cette raison, selon l'invention, une approche plus sophistiquée a été développée, comme exposée dans la suite.

Dans le cas d'un passage du référentiel embarqué (celui de la mesure) au référentiel terrestre (celui des vecteurs de référence dont l'expression est au moins partiellement connue dans ce référentiel terrestre) pour un point ou un vecteur mesuré, on observe dans l'équation 2 que la succession des rotations de référence est : premièrement le roulis (angle φ), ensuite le tangage (angle θ) et finalement le lacet (angle ψ). De préférence, les angles de roulis et de tangage sont déterminés, dans une première étape, sur la base de la mesure d'un vecteur du champ gravitationnel $\overrightarrow{g'_{mes}}$ (ayant une norme g), cette première étape étant suivie par la détermination du lacet et donc du cap au cours d'une deuxième étape, le calcul du lacet étant basé sur la mesure d'un vecteur de champ magnétique terrestre $\overrightarrow{B'_{mes}}$.

La première étape consiste donc à déterminer les angles de roulis et de tangage à partir de l'équation 5a. Le choix d'un référentiel terrestre approprié avec un vecteur du champ gravitationnel aligné avec l'axe vertical $\overrightarrow{1_z}$ permet de simplifier les calculs et de mieux anticiper un risque de blocage cadran, comme exposé dans les équations ci-dessous.

$$\overrightarrow{g_{ref}} = k \cdot R_\psi \cdot R_\theta \cdot R_\varphi \cdot \overrightarrow{g_{mes\prime}} \qquad \text{selon l'équation 5a}$$

avec

$$\overrightarrow{g_{ref}} = \begin{pmatrix} 0 \\ 0 \\ g_{z,ref} \end{pmatrix} = \begin{pmatrix} 0 \\ 0 \\ g_z \end{pmatrix} \text{ et } \overrightarrow{g_{mes\prime}} = \begin{pmatrix} g'_{x,mes} \\ g'_{y,mes} \\ g'_{z,mes} \end{pmatrix} = \begin{pmatrix} g'_x \\ g'_y \\ g'_z \end{pmatrix}$$

L'équation 5a peut être réécrite et simplifiée comme suit:

$$R_\psi^{-1} \cdot \overrightarrow{g_{ref}} = R_\psi^{T} \cdot \overrightarrow{g_{ref}} = \overrightarrow{g_{ref}} = k \cdot R_\theta \cdot R_\varphi \cdot \overrightarrow{g_{mes\prime}}$$

Et ainsi :

$$\begin{pmatrix} \cos\psi & \sin\psi & 0 \\ -\sin\psi & \cos\psi & 0 \\ 0 & 0 & 1 \end{pmatrix} \cdot \begin{pmatrix} 0 \\ 0 \\ g_z \end{pmatrix} = \begin{pmatrix} 0 \\ 0 \\ g_z \end{pmatrix} =$$

$$k \cdot \begin{pmatrix} \cos\theta & 0 & \sin\theta \\ 0 & 1 & 0 \\ -\sin\theta & 0 & \cos\theta \end{pmatrix} \cdot \begin{pmatrix} 1 & 0 & 0 \\ 0 & \cos\varphi & -\sin\varphi \\ 0 & \sin\varphi & \cos\varphi \end{pmatrix} \cdot \begin{pmatrix} g'_x \\ g'_y \\ g'_z \end{pmatrix}$$

L'angle de roulis résultant de l'équation 5a, dans le cas d'un premier vecteur mesuré qui est colinéaire à un premier vecteur de référence vertical, est donné par la relation trigonométrique suivante :

$$\varphi = \arctan\left( g'_y / g'_z \right) \qquad \text{Equation 6}$$

L'angle de tangage est ensuite donné par :

$$\theta = -\arctan\left( g'_x / g *_z \right) \qquad \text{Equation 7}$$

avec

$$g *_z = g'_y \cdot \sin\varphi + g'_z \cdot \cos\varphi$$

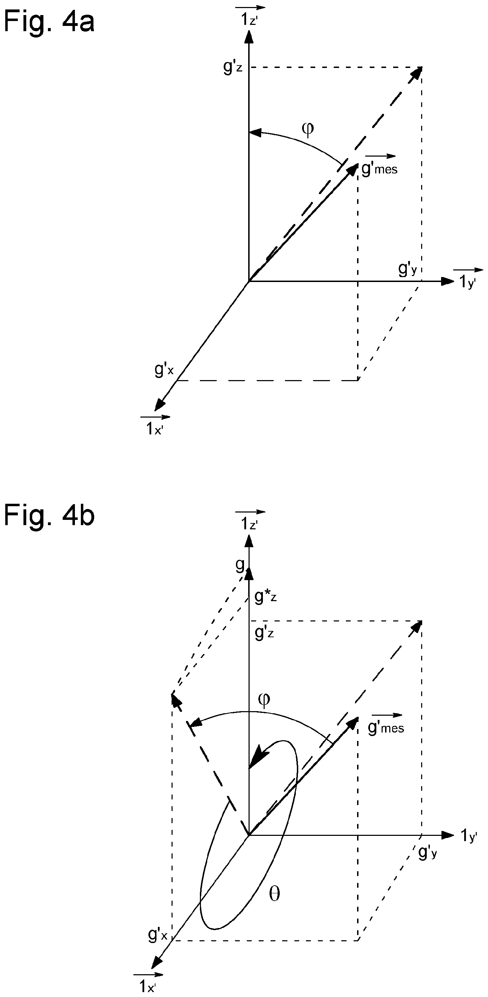

De manière avantageuse, il découle de l'équation 6 que l'angle de roulis $\varphi$ correspond à l'angle entre la projection du vecteur de champ gravitationnel terrestre $\overrightarrow{g_{mes'}}$ dans le plan de référence Y'- Z' (perpendiculaire à l'axe $\overrightarrow{1_{x'}}$ ) et l'axe $\overrightarrow{1_{z'}}$ , comme illustré en Figure 4a.

Ensuite, il découle de l'équation 7 que l'angle de tangage $\theta$ correspond à l'angle entre un vecteur de travail, résultant de la rotation du vecteur du champ gravitationnel terrestre $\overrightarrow{g_{mes'}}$ dans le plan de référence X' - Z' (perpendiculaire à l'axe $\overrightarrow{1_{y'}}$ ) et l'axe $\overrightarrow{1_{z'}}$ , comme illustré en Figure 4b.

La Figure 4b illustre que les angles de roulis et de tangage sont définis par deux rotations successives que devrait subir le vecteur du champ de force gravitationnel terrestre mesuré $\overrightarrow{g'_{mes}}$ , autour premièrement de l'axe $\overrightarrow{1_{x'}}$ pour la rotation de roulis et ensuite autour de l'axe $\overrightarrow{1_{y'}}$ pour la rotation de tangage, pour aligner ce vecteur mesuré sur l'axe $\overrightarrow{1_{z'}}$ .

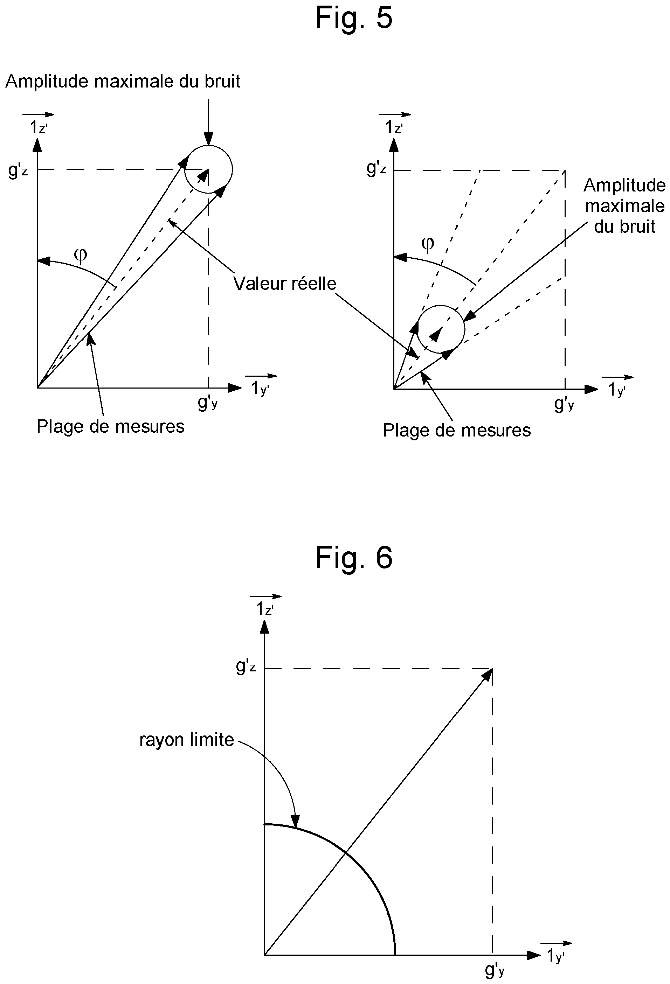

Le vecteur du champ gravitationnel mesuré dans le repère embarqué $\overrightarrow{g'_{ref}}$ peut être déterminé par un accéléromètre qui fournit des signaux de sortie représentatifs des trois composantes de ce vecteur. Cependant, il a été observé que les trois signaux correspondant aux trois composantes présentent chacune du bruit dont l'amplitude n'est pas négligeable et peut perturber fortement la mesure des angles d'orientation si aucune mesure adaptée n'est prise. On remarquera que, pour chacune des trois composantes du vecteur mesuré, le bruit est un effet aléatoire ne dépendant pas de l'amplitude du signal de mesure. Le bruit est donc problématique lors du calcul de l'attitude du dispositif portable. En effet, le calcul de l'angle de roulis se fait sur une projection, et donc potentiellement sur un vecteur d'amplitude faible. Comme le bruit est statistiquement invariant sur chaque axe de mesure, l'incertitude sur la mesure augmente lorsque l'amplitude du vecteur mesuré et projeté diminue. Dans l'exemple présenté en Fig. 5 où la rotation de roulis est effectuée avant la rotation de tangage, on observe dans le plan Y'- Z' (défini par les axes / vecteurs $\overrightarrow{1_{y'}}$ et $\overrightarrow{1_{z'}}$ du référentiel embarqué) que le bruit génère une erreur sur l'angle de roulis bien plus importante lorsque la norme est faible (voir l'image de droite relativement à l'image de gauche).

Mathématiquement, les problèmes apparaissent lorsqu'on est proche d'un cas de blocage cardan qui intervient lorsque l'axe de rotation du roulis devient sensiblement colinéaire avec l'axe de rotation du tangage. On notera que la valeur de roulis a un impact direct sur la valeur de lacet calculée. On se rend bien compte que si la valeur de roulis calculée est instable, la valeur de lacet et donc le cap indiqué par une aiguille ou un autre affichage sera elle aussi instable.

Selon l'invention, l'ordre du calcul des angles d'orientation peut être inversé afin d'éviter cette instabilité qui apparait lorsque la projection du vecteur mesuré dans le plan Y'- Z' est trop faible. Grâce à cette mesure, la norme de la projection du vecteur mesuré $\overrightarrow{g'_{mes}}$ dans le plan X'- Z' (défini par les axes / vecteurs $\overrightarrow{1_{x'}}$ et $\overrightarrow{1_{z'}}$ du référentiel embarqué), servant à calculer l'angle de tangage θ, reste alors dans une plage acceptable. Ce phénomène s'explique car, comme l'accélération est de norme constante, si sa projection est de norme faible dans un plan, elle est forcément grande dans les autres plans perpendiculaires.

L'ordre de calcul des angles de roulis et de tangage est donc soit selon un ordre donné, soit selon un ordre inverse. L'ordre donné implique premièrement une rotation de roulis suivie d'une rotation de tangage. Pour l'ordre inverse, il est prévu une inversion de l'ordre donné avec une rotation de tangage qui est calculé en premier lieu et ensuite une rotation de roulis. On notera encore que ces rotations appliquées à un vecteur mesuré dans le référentiel embarqué correspondent à une correction du roulis et du tangage que présente le dispositif portable incorporant ou muni de la boussole électronique selon l'invention et donc à des rotations de sens opposé (-φ ; -θ ) du référentiel embarqué, de sorte que ce référentiel embarqué est virtuellement réorienté avec son axe $\overrightarrow{1_{z'}}$ colinéaire à l'axe / vecteur vertical $\overrightarrow{1_z}$ du référentiel terrestre.

Pour l'ordre donné susmentionné, les angles de roulis et de tangage sont déterminés par les équations 6 et 7 données précédemment. Pour l'ordre inverse, l'équation 5a simplifiée est remplacée par l'équation 5c suivante :

$$R_\psi^{-1} \cdot \overrightarrow{g_{ref}} = R_\psi^T \cdot \overrightarrow{g_{ref}} = \overrightarrow{g_{ref}} = k \cdot R_\varphi \cdot R_\theta \cdot \overrightarrow{g_{mes'}}$$

L'angle de tangage résultant de l'équation 5c, dans le cas d'un premier vecteur mesuré qui est colinéaire à un premier vecteur de référence vertical, est donné par la relation trigonométrique suivante :

$$\theta = -\arctan\left(g'_x / g'_z\right) \qquad \text{Equation 8}$$

L'angle de roulis est ensuite donné par :

$$\varphi = \arctan\left(\frac{g'_y}{-g'_x \cdot \sin\theta + g'_z \cdot \cos\theta}\right) \quad \text{Equation 9}$$

On notera que, de manière générale, $R_\varphi \cdot R_\theta$ n'est pas égal à $R_\theta \cdot R_\varphi$, de sorte que l'inversion des deux rotations successives considérées a une influence sur la valeur de lacet calculée par la suite pour obtenir un cap de la montre bracelet 2. On y reviendra par la suite.

Le choix de l'ordre de calcul des angles de roulis et de tangage peut être basé sur différents critères. Par exemple, un premier critère exploite la norme (ou le carré de la norme) de la projection du vecteur $\overrightarrow{g'_{mes}}$ dans le plan Y'- Z'. Si cette norme est inférieure à une valeur donnée, l'ordre de calcul des angles est inversé (calcul du tangage en premier, puis du roulis). De manière alternative, un deuxième critère proposé concerne la valeur de l'angle du tangage lorsque cette valeur est déterminée selon l'ordre donné (calcul du roulis en premier, puis du tangage). S'il s'avère que le tangage est supérieur à un angle donné, le calcul des deux angles considérés ici est effectué une seconde fois avec le tangage qui est calculé en premier lieu.

Le premier critère, dit de base, vise à s'assurer que la limite de norme projetée sur le plan Y'- Z' (défini par les axes $\overrightarrow{1_{y'}}$ et $\overrightarrow{1_{z'}}$ du référentiel embarqué) soit largement plus grande que la norme maximale du bruit. De la sorte, on assure une certaine précision pour le calcul de l'angle de roulis. Avantageusement, cette condition peut s'effectuer en comparant la projection du vecteur mesuré $\overrightarrow{g'_{mes}}$ dans le plan Y'- Z' et une valeur seuil prédéterminée (rayon limite comme illustré en Fig. 6). Une condition pour passer en tangage d'abord serait que la projection du vecteur $\overrightarrow{g'_{mes}}$ projeté ait une norme inférieure à une valeur seuil donnée. Par exemple, la valeur du seuil prédéterminé est comprise entre 0,15 et 0,45 de la norme du vecteur mesuré $\overrightarrow{g'_{mes}}$, de préférence entre 0,20 et 0,30 de cette norme. Ces valeurs sont particulièrement favorables pour un instrument de navigation monté sur ou dans une montre bracelet. En effet, il s'avère que l'utilisateur a tendance à regarder sa montre avec son avant-bras positionné à l'horizontale, avec un poignet tourné environ de 30° à 60° en tangage. Ainsi, dans une réalisation avantageuse de l'invention, le choix d'utiliser l'ordre inverse se produit lorsque le tangage dépasse une valeur seuil comprise entre 70° et 75° (voir critère alternatif). En effet, il est avantageux d'éviter que l'ordre soit inversé dans une plage utile de 30° à 60° pour le tangage lorsque l'utilisateur regarde sa montre, d'où le choix d'un angle de la valeur seuil susmentionnée.

D'autres plages de valeurs peuvent être choisies pour la valeur seuil en fonction du domaine d'application de l'instrument de navigation, par exemple une plage centrée autour de cos (45°), soit 0,707. Cette sélection permet d'optimiser la diminution de l'influence du bruit de mesure pour les valeurs calculées, mais elle risque d'engendrer une instabilité dans l'affichage du cap pour une boussole électronique incorporée dans un objet portable au poignet, et éventuellement plus de répétition de la séquence de calcul des angles de roulis et de tangage du fait de cette instabilité. En effet, comme l'ordre donné et l'ordre inverse pour les rotations de roulis et de tangage appliqué au vecteur mesuré $\overrightarrow{g'_{mes}}$ conduit à une valeur de lacet / cap différente, si l'angle de tangage varie autour de la valeur seuil au cours d'une utilisation de la boussole électronique, le cap indiqué sera, sans autres mesures, recalculé à chaque changement dans le résultat de la comparaison définie par le critère pour le choix de l'ordre des deux rotations en question. Le deuxième critère, dit alternatif, est sensiblement équivalent au premier critère. Il est basé sur la comparaison entre l'angle de tangage calculé selon l'ordre donné et une valeur seuil comprise entre 65° et 80°, de préférence entre 70° et 75°.

L'approche proposée par l'invention est notamment basée sur l'observation que, malgré et quel que soit le bruit, il est toujours possible de ramener le vecteur gravitationnel mesuré sur l'axe $\overrightarrow{1_{z'}}$ avec une relativement bonne précision dans la détermination des angles de roulis et de tangage. En effet, malgré de bruit dans la mesure du vecteur gravitationnel, le calcul du roulis d'un vecteur mesuré coplanaire au plan Y'- Z' (défini par les vecteurs $\overrightarrow{1_{y'}}$ et $\overrightarrow{1_{z'}}$) est toujours relativement précis et le calcul du tangage d'un vecteur mesuré coplanaire au plan X'- Z' (défini par les vecteurs $\overrightarrow{1_{x'}}$ et $\overrightarrow{1_{z'}}$) est toujours relativement précis. Ensuite, une fois le roulis calculé en premier et la rotation correspondante appliquée au vecteur mesuré, le vecteur mesuré ainsi réorienté est dans le plan X'- Z' de sorte que le tangage peut alors être calculé avec une bonne précision. De même, une fois le tangage calculé en premier et la rotation correspondante appliquée au vecteur mesuré, le vecteur mesuré ainsi réorienté est dans le plan Y'- Z' de sorte que le roulis peut alors être calculé avec une bonne précision. On comprend donc que c'est le premier calcul d'un angle d'orientation de la boussole électronique qui est critique puisqu'il est basé sur une projection dans un plan de référence et que la norme de cette projection peut être relativement petite, de sorte que le bruit intervenant lors de la mesure peut fausser fortement le résultat du premier angle calculé ensuite par l'unité de calcul 8 de la boussole électronique 4, comme exposé précédemment. Grâce à l'invention, on assure une bonne précision ou une précision suffisante pour ce premier calcul en sélectionnant entre 'roulis premièrement' et 'tangage premièrement'.

La deuxième étape consiste à déterminer le lacet pour obtenir le cap. Cette étape consiste à résoudre l'équation 5b donnée précédemment. Le choix d'un référentiel terrestre judicieux permet de simplifier les étapes de calculs, en particulier lorsque la projection du vecteur du champ magnétique terrestre de référence $\overrightarrow{B_{ref}}$, correspondant à un deuxième vecteur de référence, dans un plan perpendiculaire à l'axe $\overrightarrow{1_z}$ est colinéaire avec l'axe $\overrightarrow{1_x}$ ; ce qui est le cas pour le référentiel terrestre NED défini au début. Dans ce cas on a l'équation suivante pour le vecteur magnétique mesuré par le capteur magnétique :

$$\begin{pmatrix} B_{x,ref} \\ B_{y,ref} \\ B_{z,ref} \end{pmatrix} = \begin{pmatrix} B_{x,ref} \\ 0 \\ B_{z,ref} \end{pmatrix} = k2 \cdot \begin{pmatrix} B_{x,mes} \\ B_{y,mes} \\ B_{z,mes} \end{pmatrix} = k2 \cdot R_\psi \cdot R_\theta \cdot R_\varphi \begin{pmatrix} B'_{x,mes} \\ B'_{y,mes} \\ B'_{z,mes} \end{pmatrix}$$

Equation 10a

L'équation 10a correspond à l'alternative 'roulis premièrement' et pour le cas 'tangage premièrement' on a une équation 10b similaire à l'équation 10a mais avec une inversion des matrices de rotation $R_\varphi$ et $R_\theta$. L'angle de lacet $\psi$ peut

être déterminé en appliquant premièrement au vecteur du champ magnétique terrestre mesuré $\overrightarrow{B'_{mes}}$, dans le repère embarqué, deux rotations successives correspondant à une rotation de roulis et une rotation de tangage selon un ordre choisi entre ledit ordre donné et ledit ordre inverse, comme exposé précédemment, de sorte à obtenir un vecteur du champ magnétique terrestre mesuré et réorienté $\overrightarrow{B*_{mes}}$, puis en calculant l'angle entre une projection, dans le plan de référence X'- Y' défini par l'axe $\overrightarrow{1_{x'}}$ et l'axe $\overrightarrow{1_{y'}}$, du vecteur du champ magnétique terrestre réorienté $\overrightarrow{B*_{mes}}$ et l'axe $\overrightarrow{1_{x'}}$. En partant des équations 10a et 10b, on obtient l'équation simplifiée suivante :

$$\begin{pmatrix} B_{x,ref} \\ 0 \\ B_{z,ref} \end{pmatrix} = k2 \cdot R_\psi \begin{pmatrix} B^*_{x,mes} \\ B^*_{y,mes} \\ B^*_{z,mes} \end{pmatrix}$$

avec selon l'ordre donné :

$$\begin{pmatrix} B^*_{x,mes} \\ B^*_{y,mes} \\ B^*_{z,mes} \end{pmatrix} = R_\theta \cdot R_\varphi \begin{pmatrix} B'_{x,mes} \\ B'_{y,mes} \\ B'_{z,mes} \end{pmatrix} \qquad \text{Equation 11a}$$

selon l'ordre inverse :

$$\begin{pmatrix} B^*_{x,mes} \\ B^*_{y,mes} \\ B^*_{z,mes} \end{pmatrix} = R_\varphi \cdot R_\theta \begin{pmatrix} B'_{x,mes} \\ B'_{y,mes} \\ B'_{z,mes} \end{pmatrix} \qquad \text{Equation 11b}$$

A partir de l'équation 10a ou 10b, l'angle de lacet / cap est donc donné par l'équation suivante :

$$\psi = -\arctan\left(B^*_{y,mes} / B^*_{x,mes}\right) \qquad \text{Equation 12}$$

Toutes les étapes de calculs décrites précédemment peuvent être réalisées par l'unité de traitement centrale 14 de la boussole électronique 4. La détermination du cap est basée sur l'angle de lacet calculé avec l'équation 12 par une unité 12 de détermination d'un cap, laquelle peut être formée par le même circuit électronique que l'unité 8 de calcul des angles de roulis et de tangage. Dans une variante, la boussole électronique comprend un indicateur 18 du Nord magnétique ou du Nord géographique et un dispositif 16 de commande de cet indicateur (voir Fig. 1 et Fig. 8). Le dispositif de commande 16 peut être agencé pour commander l'indicateur 18 de sorte qu'il présente un angle relativement à l'axe $\overrightarrow{1_x}$ égal à l'opposé à l'angle de lacet, de préférence corrigé de la déviation du champ magnétique terrestre à l'endroit où est situé l'instrument de navigation pour l'indication du Nord magnétique et, pour l'indication du Nord géographique, en plus de la déclinaison du champ magnétique terrestre.

La boussole électronique 4 comprend de préférence un dispositif 20 d'affichage de données indiquant le cap vrai (voir Fig. 1 et Fig. 8), l'unité 12 de détermination d'un cap étant configurée pour calculer le cap vrai en fonction du cap fourni par l'équation 12 donnée précédemment, d'un premier paramètre quantifiant la déclinaison du champ magnétique terrestre et d'un deuxième paramètre quantifiant la déviation du champ magnétique terrestre à l'endroit où est situé l'instrument de navigation. Notamment pour déterminer la déclinaison et la déviation du champ magnétique terrestre, l'objet portable 2 comprend en outre un dispositif de géolocalisation. La boussole électronique 4 peut avoir une mémoire non volatile dans laquelle sont stockées des informations relatives à la déclinaison et la déviation et/ou un programme prévu pour les déterminer notamment sur la base de la géolocalisation. De plus, l'objet portable peut avoir des moyens de communication sans fil ('wireless') permettant en particulier d'acquérir à la déclinaison et la déviation du champ magnétique en fonction de l'endroit où est situé l'objet portable incorporant la boussole électronique.

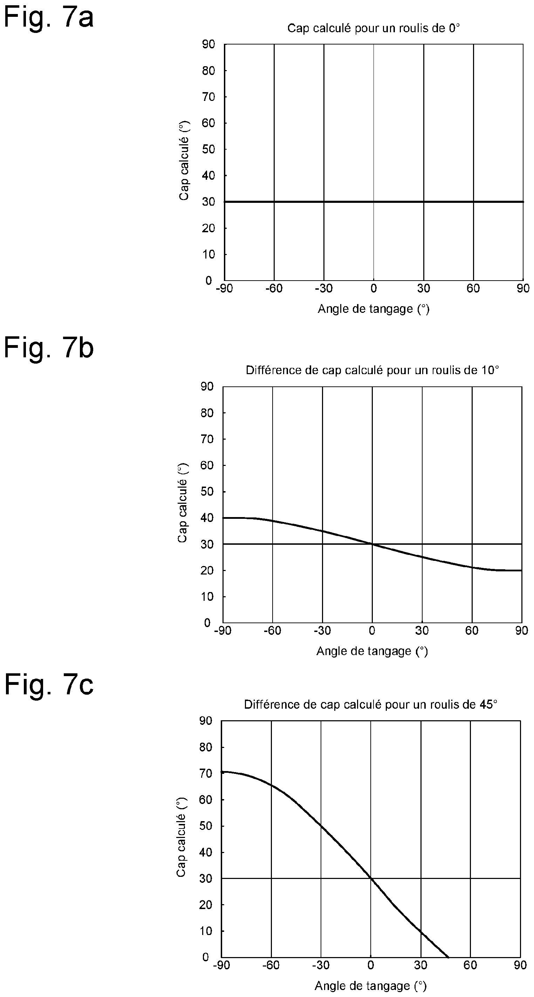

Une étude comparative a été menée pour démontrer que le choix de l'ordre de rotation entre l'ordre donné (roulis puis tangage) ou l'ordre inverse (tangage puis roulis) a relativement peu d'importance sur le résultat du calcul de l'angle de lacet, et donc du cap, dans le cadre de l'application d'une montre bracelet 2. En effet, l'ordre des rotations de roulis et tangage influence normalement le calcul de l'angle roulis et l'angle de tangage car, comme déjà indiqué, le produit de matrices n'est pas commutatif ($R_\theta \cdot R_\varphi \neq R_\varphi \cdot R_\theta$). La Figure 7a montre qu'en absence de roulis (l'avant-bras portant la montre bracelet muni de la boussole électronique étant à l'horizontale), la permutation entre l'ordre donné et inverse, n'a aucun impact. Cette constatation est importante, car il s'avère qu'un utilisateur a tendance à regarder sa montre au poignet avec son avant-bras positionné sensiblement à l'horizontale, avec un poignet tourné en particulier de 30° à 60° en tangage. Ainsi, dans une réalisation avantageuse de l'invention, le choix d'utiliser l'ordre inverse se produit lorsque le tangage dépasse 70°, mais on pourrait aussi choisir une autre valeur seuil, par exemple 60°. En effet, il est avantageux, comme déjà exposé, d'éviter que l'ordre soit inversé dans une plage usuelle de tangage pour éviter une instabilité dans la succession des séquences de calcul des angles d'orientation et/ou une augmentation du nombre de ces séquences de calcul, d'où le choix (arbitraire) d'un angle supérieur à 60°, notamment 70°. Tant que le roulis demeure faible, ce qui est pratiquement le cas en général, même en opérant au-delà de cette valeur, l'utilisateur de la montre ne remarquera pas de différence lors du passage de l'ordre donné à l'ordre inverse (Fig. 7a). Pour mémoire, cette inversion permet de réduire l'influence du bruit de mesure sur la détermination des angles d'orientation de l'instrument de navigation (en particulier d'une boussole électronique), pour augmenter la précision de la mesure du cap et aussi pour réduire une instabilité éventuelle des résultats successifs donnés par une succession de séquences de calcul, une telle instabilité se traduisant par une oscillation de l'aiguille indiquant le Nord et/ou de la valeur cap affichée.

On notera toutefois que, pour un roulis relativement faible (voir Fig. 7b : 10° de roulis), on observe déjà un écart significatif de maximum de 10° dans la plage 0°- 90°, en particulier environ 5° à 8° dans la plage 40°- 60° qui correspond aux valeurs courantes. Ainsi, le fait d'éviter que la valeur seuil prédéterminée soit située dans ou corresponde à la plage de tangage usuelle est avantageux. La Fig. 7c montre que lorsque l'angle de roulis augmente, l'écart du résultat pour le cap entre l'ordre donné et l'ordre inverse se creuse. Ainsi, pour un angle de roulis de 45° et dans une plage de tangage de 0° à 30°, la différence pour la valeur du cap peut atteindre 20°.

L'invention ne se limite pas au dispositif portable du premier mode de réalisation décrit ci-avant. En effet, l'inversion de l'ordre des rotations permet non seulement de réduire avantageusement la sensibilité au bruit de mesure lors de la prédiction de deux angles d'orientation mais aussi de ne plus souffrir de l'effet de blocage cardan pour de nombreux objets, tel qu'un véhicule de transport ou un objet volant. De manière générale, l'inversion de l'ordre des rotations selon l'invention opère comme un filtre visant à réduire l'effet du bruit de la mesure d'au moins un vecteur d'un champ de force terrestre et à supprimer le blocage de cardan lors de la détermination des angles d'orientation d'un objet relativement à un référentiel terrestre.

Dans un deuxième mode de réalisation, l'instrument de navigation permet de déterminer deux angles d'orientation d'un système dans le cadre de coordonnées sphériques. L'instrument de navigation permet donc de déterminer les deux angles d'orientation de l'axe $\overrightarrow{1_r}$ du référentiel embarqué sur la base de la mesure d'un vecteur de champ magnétique terrestre déterminé via un moyen de géolocalisation.

Le premier mode de réalisation propose de calculer premièrement les angles de roulis et de tangage en fonction de la mesure, dans un référentiel lié à l'instrument de navigation, d'un vecteur de champ gravitationnel $\overrightarrow{g'_{mes}}$, puis l'angle de lacet à partir de la mesure dans le même référentiel embarqué d'un vecteur de champ magnétique terrestre $\overrightarrow{B'_{mes}}$. Cet ordre peut être inversé avec une première étape de calcul de l'angle de lacet et de roulis à partir d'une mesure, toujours dans un référentiel lié à l'instrument de navigation, d'un vecteur de champ magnétique terrestre $\overrightarrow{B'_{mes}}$, puis l'angle de tangage à partir de la mesure, dans ce référentiel embarqué, d'un vecteur de champ gravitationnel terrestre $\overrightarrow{g'_{mes}}$. Cet exemple montre que le choix des axes des référentiels considérés tout comme l'ordre donné des rotations est arbitraire.

**Revendications**

**1.** Un instrument de navigation (4) comprenant :

- un premier capteur (6) configuré pour mesurer trois composantes d'un premier vecteur, dit premier vecteur mesuré, d'un premier champ de force terrestre ( $\overrightarrow{g'_{mes}}$ ; $\overrightarrow{B'_{mes}}$ ) dans un référentiel ( $\overrightarrow{1_{x'}}$ , $\overrightarrow{1_{y'}}$ , $\overrightarrow{1_{z'}}$ ) lié audit instrument de navigation, dit référentiel embarqué, et générer des premiers signaux de sortie qui sont représentatifs desdites trois composantes ( $g'_{x,mes}$, $g'_{y,mes}$, $g'_{z,mes}$ ; $B'_{x,mes}$, $B'_{y,mes}$, $B'_{z,mes}$ ) ;

- une unité (8) de calcul d'angles d'orientation ($\varphi$, $\theta$, $\psi$) de l'instrument de navigation, cette unité de calcul étant connectée audit premier capteur (6) pour recevoir lesdits premiers signaux de sortie et étant configurée pour pouvoir calculer un premier angle d'orientation ($\varphi$) et un deuxième angle d'orientation ($\theta$) dudit référentiel embarqué, et ainsi de l'instrument de navigation (4), par rapport à un référentiel terrestre ( $\overrightarrow{1_x}$, $\overrightarrow{1_y}$, $\overrightarrow{1_z}$ ), ces premier et deuxième angles d'orientation étant définis par deux rotations successives que doit subir le premier vecteur mesuré, autour d'un premier axe de rotation de référence ( $\overrightarrow{1_{x'}}$ ) du référentiel embarqué pour le premier angle d'orientation et d'un deuxième axe de rotation de référence ( $\overrightarrow{1_{y'}}$ ) du référentiel embarqué pour le deuxième angle d'orientation, pour aligner ce premier vecteur mesuré sur un vecteur de calcul ayant, dans le référentiel embarqué, trois composantes de calcul qui sont identiques à trois composantes de référence, dans le référentiel terrestre, d'un premier vecteur de référence ( $\overrightarrow{g_{ref}}$ ; $\overrightarrow{B_{ref}}$ ) qui est prédéfini ou prédéterminé dans le référentiel terrestre ;

**caractérisé en ce que** l'unité (8) de calcul d'angles d'orientation est configurée pour pouvoir déterminer les premier et deuxième angles d'orientation selon un ordre donné pour lesdites deux rotations successives et également selon un ordre inverse ; et **en ce que** l'unité de calcul (8) est agencée pour pouvoir choisir entre ledit ordre donné et ledit ordre inverse, pour calculer les premier et deuxième angles d'orientation, en fonction d'une comparaison entre un indicateur d'un risque d'erreur, quantifiant un risque d'instabilité de ladite unité de calcul lors de la détermination des premier et deuxième angles d'orientation, et un seuil prédéterminé, ledit indicateur du risque d'erreur étant déterminé par l'instrument de navigation en fonction d'au moins deux desdits premiers signaux de sortie.

2. Instrument de navigation selon la revendication 1, **caractérisé en ce que** ledit indicateur du risque d'erreur est la norme de la projection du premier vecteur mesuré dans un plan perpendiculaire au premier axe de rotation de référence ; et **en ce que** l'unité (8) de calcul d'angles d'orientation est configurée pour déterminer premièrement le premier angle d'orientation, en effectuant parmi lesdites deux rotations successives premièrement la rotation du premier vecteur mesuré autour du premier axe de rotation de référence, lorsque ledit indicateur du risque d'erreur est supérieur audit seuil prédéterminé.

3. Instrument de navigation selon la revendication 2, **caractérisé en ce que** la valeur du seuil prédéterminé est comprise entre 0,15 et 0,45 de la norme du premier vecteur mesuré, de préférence entre 0,20 et 0,30 de cette norme.

4. Instrument de navigation selon la revendication 1, **caractérisé en ce que** ledit indicateur du risque d'erreur est la valeur absolue du deuxième angle d'orientation lorsque le premier angle d'orientation est calculé avant le deuxième angle d'orientation ; et **en ce que** l'unité (8) de calcul d'angles d'orientation est configurée pour déterminer à nouveau les premier et deuxième angles d'orientation en calculant premièrement le deuxième angle d'orientation, en effectuant parmi lesdites deux rotations successives premièrement la rotation du premier vecteur mesuré autour du deuxième axe de rotation de référence, lorsque ledit indicateur du risque d'erreur est supérieur audit seuil prédéterminé ; l'unité de calcul (8) conservant alors les valeurs des premier et deuxième angles d'orientation à nouveau déterminées pour ces premier et deuxième angles d'orientation.

5. Instrument de navigation selon la revendication 4, **caractérisé en ce que** la valeur du seuil prédéterminé est comprise entre 65° et 80°, de préférence entre 70° et 75°.

6. Instrument de navigation selon l'une des revendications précédentes, **caractérisé en ce qu'**un axe prédéfini du référentiel terrestre est aligné avec le premier vecteur de référence, de préférence ce premier vecteur de référence étant aligné avec un axe vertical $\overrightarrow{1_z}$ du référentiel terrestre.

7. Instrument de navigation selon la revendication précédente, **caractérisé en ce que** le premier vecteur mesuré est un vecteur du champ de force gravitationnel terrestre

8. Instrument de navigation selon la revendication précédente, **caractérisé en ce que** le premier vecteur mesuré est déterminé au moyen d'un accéléromètre (6) formant ledit premier capteur.

9. Instrument de navigation selon l'une des revendications précédentes, **caractérisé en ce que** le premier axe de rotation de référence correspond à un axe $\vec{1_{x'}}$ du référentiel embarqué et le deuxième axe de rotation de référence correspond à un axe $\vec{1_{y'}}$ du référentiel embarqué, ces premier et deuxième axes de rotation de référence étant perpendiculaires.

10. Instrument de navigation selon l'une des revendications précédentes, **caractérisé en ce que** ledit instrument comporte un deuxième capteur (10) configuré pour mesurer les trois composantes d'un deuxième vecteur, dit deuxième vecteur mesuré, d'un deuxième champ de force terrestre dans le référentiel embarqué, ce deuxième vecteur mesuré étant non colinéaire au premier vecteur mesuré, et pour générer des deuxièmes signaux de sortie représentatifs de ces trois composantes ; et **en ce que** l'instrument de navigation comprend en outre une unité (12) de détermination d'un troisième angle d'orientation dudit référentiel embarqué, et ainsi de cet instrument de navigation, relativement au référentiel terrestre, cette unité de détermination étant connectée audit deuxième capteur (10) pour recevoir lesdits deuxièmes signaux de sortie et étant configurée pour déterminer le troisième angle d'orientation à partir desdits premier et deuxième angles d'orientation calculés et des deuxièmes signaux de sortie.

11. Instrument de navigation selon la revendication précédente, **caractérisé en ce que** ladite unité de calcul (8) et ladite unité (12) de détermination du troisième angle d'orientation sont formées par une seule et même unité électronique qui forme elle-même une unité électronique centrale (14) de l'instrument de navigation.

12. Instrument de navigation selon la revendication 10 ou 11 dépendante de la revendication 9, **caractérisé en ce que** le troisième angle d'orientation est défini par une rotation que doit subir le deuxième vecteur mesuré, après avoir été réorienté dans le référentiel embarqué par une application à ce deuxième vecteur mesuré desdites première et deuxième rotations successives, autour d'un troisième axe de rotation de référence, perpendiculaire aux premier et deuxième axes de rotation de référence et correspondant au troisième axe $\vec{1_{z'}}$ du référentiel embarqué, pour que le deuxième vecteur mesuré et réorienté, dit deuxième vecteur réorienté, soit situé dans un premier plan de référence du référentiel embarqué comprenant les premier et troisième axes de rotation de référence.

13. Instrument de navigation selon la revendication 12, **caractérisé en ce que** le troisième angle d'orientation est déterminé en appliquant premièrement au deuxième vecteur mesuré lesdites première et deuxième rotations successives, de préférence dans l'ordre choisi entre ledit ordre donné et ledit ordre inverse pour définir les premier et deuxième angles d'orientation, de sorte à obtenir le deuxième vecteur réorienté, puis en calculant l'angle entre une projection, dans un deuxième plan de référence comprenant les premier et deuxième axes de rotation de référence, du deuxième vecteur réorienté et le premier axe de rotation de référence.

14. Instrument de navigation selon l'une des revendications 10 à 13, **caractérisé en ce que** le deuxième vecteur mesuré est un vecteur du champ magnétique terrestre, ce deuxième vecteur mesuré étant déterminé au moyen d'un capteur magnétique (10) formant ledit deuxième capteur.

15. Instrument de navigation selon l'une des revendications 10 à 14, **caractérisé en ce que** le troisième angle d'orientation est considéré comme un cap de cet instrument.

16. Instrument de navigation selon l'une des revendications 1 à 5, **caractérisé en ce que** le premier vecteur mesuré est un vecteur du champ magnétique terrestre, ce premier vecteur mesuré étant déterminé au moyen d'un capteur magnétique (10) formant ledit premier capteur.

17. Instrument de navigation selon la revendication 16, **caractérisé en ce que** lesdites trois composantes de référence sont prédéterminées à partir de données provenant d'un dispositif de localisation de l'instrument de navigation, notamment du type GPS.

18. Instrument de navigation selon la revendication 16 ou 17 combinée à l'une des revendications 10 à 13 dépendantes de l'une des revendications 1 à 5, **caractérisé en ce que** le deuxième vecteur mesuré est un vecteur du champ de force gravitationnel terrestre.

19. Instrument de navigation selon la revendication 18, **caractérisé en ce que** le deuxième vecteur mesuré est déterminé au moyen d'un accéléromètre (6) qui forme ledit deuxième capteur.

**20.** Instrument de navigation selon l'une des revendications 10 à 15 dépendantes de la revendication 9, **caractérisé en ce que** cet instrument est une boussole électronique (4) qui comprend un indicateur (18) du Nord magnétique ou du Nord géographique et des moyens de commande (16) de cet indicateur, lesquels sont agencés pour commander l'indicateur (18) de sorte qu'il présente un angle relativement au premier axe de rotation de référence égal à l'opposé du troisième angle d'orientation, de préférence corrigé de la déviation du champ magnétique terrestre à l'endroit où est situé l'instrument de navigation pour l'indication du Nord magnétique et, pour l'indication du Nord géographique, en sus de la déclinaison du champ magnétique terrestre.

**21.** Instrument de navigation selon la revendication 15 ou la revendication 20 dépendante de la revendication 15, **caractérisé en ce que** cet instrument comprend un dispositif (20) d'affichage de données indiquant le cap vrai, ladite unité de calcul (8) étant configurée pour calculer le cap vrai en fonction dudit cap, d'un premier paramètre quantifiant la déclinaison du champ magnétique terrestre et d'un deuxième paramètre quantifiant la déviation du champ magnétique terrestre à l'endroit où est situé l'instrument de navigation.

**22.** Dispositif portable (2) comprenant l'instrument de navigation selon l'une des revendications précédentes.

**23.** Dispositif portable selon la revendication précédente, **caractérisé en ce que** ce dispositif, en particulier une montre bracelet (2), est portable au poignet d'un utilisateur ; et **en ce que** le premier axe de rotation de référence ( $\overrightarrow{1_{x'}}$ ) correspond à l'axe 6-12 heures et le deuxième axe de rotation de référence ( $\overrightarrow{1_{y'}}$ ) correspond à l'axe 9-3 heures de ce dispositif portable au poignet.

**24.** Méthode de détermination d'angles d'orientation d'un instrument de navigation (4) par rapport à un référentiel terrestre ( $\overrightarrow{1_x}$, $\overrightarrow{1_y}$, $\overrightarrow{1_z}$ ), cette méthode comprenant les étapes suivantes :

- acquisition des trois composantes d'un premier vecteur, dit premier vecteur mesuré, d'un premier champ de force terrestre dans un référentiel ( $\overrightarrow{1_{x'}}$, $\overrightarrow{1_{y'}}$, $\overrightarrow{1_{z'}}$ ) lié audit instrument de navigation, dit référentiel embarqué ;
- détermination d'un premier angle d'orientation et d'un deuxième angle d'orientation du référentiel embarqué par rapport au référentiel terrestre, ces premier et deuxième angles d'orientation étant définis par deux rotations successives du premier vecteur mesuré, autour d'un premier axe de rotation de référence du référentiel embarqué pour le premier angle d'orientation et d'un deuxième axe de rotation de référence du référentiel embarqué pour le deuxième angle d'orientation, permettant d'aligner le premier vecteur mesuré sur un vecteur de calcul ayant, dans le référentiel embarqué, trois composantes de calcul qui sont identiques à trois composantes de référence, dans le référentiel terrestre, d'un premier vecteur de référence qui est prédéfini ou prédéterminé dans le référentiel terrestre ; ladite détermination comprenant, pour calculer les premier et deuxième angles d'orientation, une étape de choix entre un ordre donné pour les deux rotations successives et un ordre inverse en fonction d'une comparaison entre un indicateur d'un risque d'erreur, quantifiant un risque d'instabilité lors de la détermination des premier et deuxième angles d'orientation, et un seuil prédéterminé, ledit indicateur du risque d'erreur étant déterminé en fonction d'au moins deux desdites composantes du premier vecteur mesuré.

**25.** Méthode selon la revendication 24, **caractérisée en ce que** ledit indicateur du risque d'erreur est la norme de la projection du premier vecteur mesuré dans un plan perpendiculaire au premier axe de rotation de référence ; et **en ce que**, lorsque ledit indicateur du risque d'erreur est supérieur audit seuil prédéterminé, le premier angle d'orientation est calculé selon ledit ordre donné en effectuant premièrement, parmi lesdites deux rotations successives, la rotation du premier vecteur mesuré autour du premier axe de rotation de référence.

**26.** Méthode selon la revendication 25, **caractérisée en ce que** la valeur du seuil prédéterminé est comprise entre 0,15 et 0,45 de la norme du premier vecteur mesuré, de préférence entre 0,20 et 0,30 de cette norme.

**27.** Méthode selon la revendication 24, **caractérisée en ce que** ledit indicateur du risque d'erreur est la valeur absolue du deuxième angle d'orientation lorsque, selon ledit ordre donné, le premier angle d'orientation est calculé avant le deuxième angle d'orientation ; et **en ce que**, lorsque ledit indicateur du risque d'erreur est supérieur audit seuil prédéterminé, les premier et deuxième angles d'orientation sont à nouveau calculés selon ledit ordre inverse en effectuant, parmi lesdites deux rotations successives, premièrement la rotation du premier vecteur mesuré autour du deuxième axe de rotation de référence ; les valeurs des premier et deuxième angles d'orientation à nouveau calculées étant alors conservées pour ces premier et deuxième angles d'orientation.

28. Méthode selon la revendication 27, **caractérisée en ce que** la valeur du seuil prédéterminé est comprise entre 65° et 80°, de préférence entre 70° et 75°.

29. Méthode selon l'une des revendications 24 à 28, **caractérisée en ce qu'**un axe prédéfini du référentiel terrestre est aligné avec le premier vecteur de référence, de préférence ce premier vecteur de référence étant aligné avec un axe vertical $\overrightarrow{1_z}$ du référentiel terrestre.

30. Méthode selon l'une des revendications 24 à 29, **caractérisée en ce que** le premier vecteur mesuré est un vecteur du champ de force gravitationnel terrestre.

31. Méthode selon la revendication précédente, **caractérisée en ce que** le premier vecteur mesuré est déterminé au moyen d'un accéléromètre (6).

32. Méthode selon l'une des revendications 24 à 31, **caractérisée en ce que** le premier angle d'orientation et le deuxième angle d'orientation sont respectivement un angle de roulis et un angle de tangage, l'angle de roulis étant associé à une rotation autour du premier axe de rotation de référence, correspondant à l'axe $\overrightarrow{1_{x\prime}}$ du référentiel embarqué lorsque l'angle de roulis est déterminé en premier, et l'angle de tangage étant associé à une rotation autour du deuxième axe de rotation de référence, correspondant à l'axe $\overrightarrow{1_{y\prime}}$ du référentiel embarqué lorsque l'angle de tangage est déterminé en premier.

33. Méthode selon l'une des revendications 24 à 32, **caractérisée en ce que** la méthode comprend en outre une étape d'acquisition de trois composantes d'un deuxième vecteur, dit deuxième vecteur mesuré, d'un deuxième champ de force terrestre dans ledit référentiel embarqué ( $\overrightarrow{1_{x\prime}}$ , $\overrightarrow{1_{y\prime}}$ , $\overrightarrow{1_{z\prime}}$ ), ce deuxième vecteur mesuré étant non colinéaire au premier vecteur mesuré, et une étape de détermination d'un troisième angle d'orientation du référentiel embarqué, et ainsi dudit instrument de navigation, par rapport au référentiel terrestre à partir des premier et deuxième angles d'orientation calculés et des trois composantes du deuxième vecteur mesuré.

34. Méthode selon la revendication 33, **caractérisée en ce que** le troisième angle d'orientation est déterminé en appliquant premièrement au deuxième vecteur mesuré lesdites première et deuxième rotations successives, de préférence dans l'ordre choisi entre ledit ordre donné et ledit ordre inverse, pour obtenir un deuxième vecteur mesuré et réorienté, dit deuxième vecteur réorienté, dans le référentiel embarqué, puis en calculant l'angle entre une projection du deuxième vecteur réorienté dans un plan de référence, comprenant les premier et deuxième axes de rotation de référence, et le premier axe de rotation de référence.

35. Méthode selon la revendication 33 ou 34 dépendante de la revendication 32, **caractérisée en ce que** le troisième angle d'orientation est un angle de lacet de l'instrument de navigation, cet angle de lacet étant défini par une rotation du référentiel embarqué autour d'un troisième axe de rotation de référence, correspondant à l'axe vertical $\overrightarrow{1_z}$ dans le référentiel terrestre, après corrections du roulis et du tangage.

36. Méthode selon la revendication 35, **caractérisée en ce que** le troisième angle d'orientation est considéré comme un cap de l'instrument de navigation.

37. Méthode selon l'une des revendications 33 à 36 dépendante de la revendication 30 ou 31, **caractérisée en ce que** le deuxième vecteur d'un deuxième champ de force terrestre est un vecteur du champ magnétique terrestre ; et **en ce que** ledit deuxième vecteur est mesuré au moyen d'un capteur magnétique (10).

38. Méthode selon l'une des revendications 24 à 29, **caractérisée en ce que** le premier vecteur d'un premier champ de force terrestre est un vecteur du champ magnétique terrestre ; et **en ce que** ledit premier vecteur est mesuré au moyen d'un capteur magnétique.

**39.** Méthode selon la revendication 38 combinée avec la revendication 33 ou 34 dépendante de l'une quelconque des revendications 24 à 29, **caractérisée en ce que** le deuxième vecteur d'un deuxième champ de force terrestre est un vecteur du champ de force gravitationnel terrestre.

**40.** Méthode selon la revendication précédente, **caractérisée en ce que** le deuxième vecteur d'un deuxième champ terrestre est mesuré au moyen d'un accéléromètre (6).

**41.** Méthode selon l'une quelconque des revendications 38 à 40, **caractérisée en ce que** lesdites trois composantes de référence sont déterminées à partir de données provenant d'un dispositif de localisation de l'instrument de navigation, notamment du type GPS.

**42.** Méthode selon l'une des revendications 24 à 41, **caractérisée en ce que** ledit instrument de navigation est une boussole électronique (4).

**43.** Méthode selon la revendication 36, **caractérisée en ce que** ledit instrument de navigation comprend un moyen (20) d'affichage de données indiquant le cap vrai ; et **en ce que** la méthode comprend en outre une étape de détermination du cap vrai en fonction dudit cap déterminé dans une des étapes précédentes, d'un premier paramètre quantifiant la déclinaison et d'un deuxième paramètre quantifiant la déviation du champ magnétique terrestre à l'endroit où est situé l'instrument de navigation.

**44.** Méthode selon l'une des revendications 24 à 43, **caractérisée en ce que** l'instrument de navigation est configuré pour être monté sur ou intégré dans un dispositif portable (2).

**45.** Méthode selon la revendication précédente, **caractérisé en ce que** le dispositif portable, en particulier une montre bracelet (2), est portable au poignet d'un utilisateur ; et **en ce que** le premier axe de rotation de référence ($\overrightarrow{1_{x\prime}}$) correspond à l'axe 6-12 heures, et le deuxième axe de rotation de référence ($\overrightarrow{1_{y\prime}}$) correspond à l'axe 9-3 heures.

**46.** Programme d'ordinateur comprenant des instructions qui, lorsque le programme est exécuté par un ordinateur, conduisent cet ordinateur à mettre en œuvre les étapes de la méthode selon l'une des revendications 24 à 45.

**47.** Support d'enregistrement lisible par ordinateur comprenant des instructions qui, lorsqu'elles sont exécutées par un ordinateur, conduisent cet ordinateur à mettre en œuvre les étapes de la méthode selon l'une des revendications 24 à 45.

**Patentansprüche**

**1.** Navigationsinstrument (4), umfassend:

- einen ersten Sensor (6), der konfiguriert ist, um drei Komponenten eines ersten Vektors, erster gemessener Vektor genannt, eines ersten terrestrischen Kraftfelds ($\overrightarrow{g\prime_{mes}}$ ; $\overrightarrow{B\prime_{mes}}$) in einem Bezugssystem ($\overrightarrow{1_{x\prime}}$, $\overrightarrow{1_{y\prime}}$, $\overrightarrow{1_{z\prime}}$) zu messen, das mit dem Navigationsinstrument verbunden ist, bordeigenes Bezugssystem genannt, und erste Ausgangssignale zu erzeugen, die repräsentativ für die drei Komponenten ($g\prime_{x,mes}$, $g\prime_{y,mes}$, $g\prime_{z,mes}$ ; $B\prime_{x,mes}$, $B\prime_{y,mes}$, $B\prime_{z,mes}$) sind;

- eine Einheit (8) zum Berechnen von Orientierungswinkeln ($\varphi$, $\theta$, $\psi$) des Navigationsinstruments, wobei diese Berechnungseinheit mit dem ersten Sensor (6) verbunden ist, um die ersten Ausgangssignale zu empfangen, und konfiguriert ist, um einen ersten Orientierungswinkel ($\varphi$) und einen zweiten Orientierungswinkel ($\theta$) des bordeigenen Bezugssystems und somit des Navigationsinstruments (4) in Bezug auf ein terrestrisches Be- zugssystem ($\overrightarrow{1_{x}}$, $\overrightarrow{1_{y}}$, $\overrightarrow{1_{z}}$) berechnen zu können, wobei dieser erste und zweite Orientierungswinkel durch zwei aufeinanderfolgende Drehungen, die der erste gemessene Vektor um eine erste Bezugsdrehachse ($\overrightarrow{1_{x\prime}}$) des bordeigenen Bezugssystems für den ersten Orientierungswinkel und um eine zweite Bezugsdrehachse (

$\overrightarrow{1_{y'}}$ ) des bordeigenen Bezugssystems für den zweiten Orientierungswinkel zu erfahren hat, definiert sind, um diesen ersten gemessenen Vektor an einem Berechnungsvektor zu orientieren, der im bordeigenen Bezugssystem drei Berechnungskomponenten aufweist, die gleich den drei Bezugskomponenten eines ersten Bezugsvektors im terrestrischen Bezugssystem ( $\overrightarrow{g_{ref}}$ ; $\overrightarrow{B_{ref}}$ ) sind, der im terrestrischen Bezugssystem vordefiniert oder vorbestimmt ist;

**dadurch gekennzeichnet, dass** die Einheit (8) zum Berechnen von Orientierungswinkeln konfiguriert ist, um die ersten und zweiten Orientierungswinkel in einer gegebenen Reihenfolge für die beiden aufeinanderfolgenden Drehungen und auch in umgekehrter Reihenfolge bestimmen zu können; und dadurch, dass die Einheit zum Berechnen (8) angeordnet ist, um zwischen der gegebenen Reihenfolge und der umgekehrten Reihenfolge wählen zu können, um den ersten und zweiten Orientierungswinkel in Abhängigkeit von einem Vergleich zwischen einem Indikator eines Fehlerrisikos, der ein Risiko der Instabilität der Berechnungseinheit beim Bestimmen des ersten und des zweiten Orientierungswinkels quantifiziert, und einem vorbestimmten Schwellenwert zu berechnen, wobei der Indikator des Fehlerrisikos durch das Navigationsinstrument in Abhängigkeit von mindestens zwei der ersten Ausgangssignale bestimmt wird.

2. Navigationsinstrument nach Anspruch 1, **dadurch gekennzeichnet, dass** der Indikator des Fehlerrisikos die Norm der Projektion des ersten Vektors ist, der in einer Ebene senkrecht zur ersten Bezugsdrehachse gemessen wird; und dadurch, dass die Einheit (8) zum Berechnen von Orientierungswinkeln konfiguriert ist, um zuerst den ersten Orientierungswinkel zu bestimmen, indem sie unter den zwei aufeinanderfolgenden Drehungen zuerst die Drehung des ersten gemessenen Vektors um die erste Bezugsdrehachse durchführt, wenn der Indikator des Fehlerrisikos größer als der vorbestimmte Schwellenwert ist.

3. Navigationsinstrument nach Anspruch 2, **dadurch gekennzeichnet, dass** der Wert des vorbestimmten Schwellenwertes zwischen 0,15 und 0,45 der Norm des ersten gemessenen Vektors, vorzugsweise zwischen 0,20 und 0,30 dieser Norm liegt.

4. Navigationsinstrument nach Anspruch 1, **dadurch gekennzeichnet, dass** der Indikator des Fehlerrisikos der Absolutwert des zweiten Orientierungswinkels ist, wenn der erste Orientierungswinkel vor dem zweiten Orientierungswinkel berechnet wird; und dadurch, dass die Einheit (8) zum Berechnen von Orientierungswinkeln konfiguriert ist, um den ersten und zweiten Orientierungswinkel erneut zu bestimmen, indem sie zuerst den zweiten Orientierungswinkel berechnet, indem sie unter den beiden aufeinanderfolgenden Drehungen zuerst die Drehung des ersten gemessenen Vektors um die zweite Bezugsdrehachse durchführt, wenn der Indikator des Fehlerrisikos größer als der vorbestimmte Schwellenwert ist; wobei die Einheit zum Berechnen (8) dann die Werte des ersten und zweiten Orientierungswinkels, die erneut für diese ersten und zweiten Orientierungswinkel bestimmt wurden, beibehält.

5. Navigationsinstrument nach Anspruch 4, **dadurch gekennzeichnet, dass** der Wert des vorbestimmten Schwellenwerts zwischen 65° und 80°, vorzugsweise zwischen 70° und 75° liegt.

6. Navigationsinstrument nach einem der vorstehenden Ansprüche, **dadurch gekennzeichnet, dass** eine vordefinierte Achse des terrestrischen Bezugssystems am ersten Bezugsvektor orientiert ist, wobei dieser erste Bezugsvektor vorzugsweise an einer vertikalen Achse $\overrightarrow{1_z}$ des terrestrischen Bezugssystems orientiert ist.

7. Navigationsinstrument nach dem vorstehenden Anspruch, **dadurch gekennzeichnet, dass** der erste gemessene Vektor ein Vektor des terrestrischen Schwerkraftfeldes ist.

8. Navigationsinstrument nach dem vorstehenden Anspruch, **dadurch gekennzeichnet, dass** der erste gemessene Vektor anhand eines Beschleunigungsmessers (6) bestimmt wird, der den ersten Sensor bildet.

9. Navigationsinstrument nach einem der vorstehenden Ansprüche, **dadurch gekennzeichnet, dass** die erste Bezugsdrehachse einer Achse $\overrightarrow{1_{x'}}$ des bordeigenen Bezugssystems entspricht und die zweite Bezugsdrehachse einer Achse $\overrightarrow{1_{y'}}$ des bordeigenen Bezugssystems entspricht, wobei diese erste und zweite Bezugsdrehachse senkrecht zueinander sind.

**10.** Navigationsinstrument nach einem der vorstehenden Ansprüche, **dadurch gekennzeichnet, dass** das Instrument einen zweiten Sensor (10) umfasst, der konfiguriert ist, um die drei Komponenten eines zweiten Vektors, zweiter gemessener Vektor genannt, eines zweiten terrestrischen Kraftfeldes in dem bordeigenen Bezugssystem zu messen, wobei dieser zweite gemessene Vektor nicht kollinear mit dem ersten gemessenen Vektor ist, und um zweite Ausgangssignale zu erzeugen, die für diese drei Komponenten repräsentativ sind; und dadurch, dass das Navigationsinstrument weiter eine Einheit (12) zum Bestimmen eines dritten Orientierungswinkels des bordeigenen Bezugssystems und somit dieses Navigationsinstruments in Bezug zum terrestrischen Bezugssystem umfasst, wobei diese Bestimmungseinheit mit dem zweiten Sensor (10) verbunden ist, um die zweiten Ausgangssignale zu empfangen, und konfiguriert ist, um den dritten Orientierungswinkel aus dem berechneten ersten und zweiten Orientierungswinkel und den zweiten Ausgangssignalen zu bestimmen.

**11.** Navigationsinstrument nach dem vorstehenden Anspruch, **dadurch gekennzeichnet, dass** die Einheit zum Berechnen (8) und die Einheit (12) zum Bestimmen des dritten Orientierungswinkels durch ein und dieselbe elektronische Einheit gebildet werden, die ihrerseits eine zentrale elektronische Einheit (14) des Navigationsinstruments bildet.

**12.** Navigationsinstrument nach Anspruch 10 oder 11 in Abhängigkeit von Anspruch 9, **dadurch gekennzeichnet, dass** der dritte Orientierungswinkel durch eine Drehung definiert ist, die der zweite gemessene Vektor zu erfahren hat, nachdem er im bordeigenen Bezugssystem durch Anwendung der ersten und zweiten aufeinanderfolgenden Drehungen auf diesen zweiten gemessenen Vektor um eine dritte Bezugsdrehachse, die senkrecht zur ersten und zweiten Bezugsdrehachse steht und der dritten Achse $\overrightarrow{1}_{z'}$ des bordeigenen Bezugssystems entspricht, neu orientiert worden ist, damit sich der zweite gemessene und neu orientierte Vektor, zweiter neu orientierter Vektor genannt, in einer ersten Bezugsebene des bordeigenen Bezugssystems befindet, welche die erste und dritte Bezugsdrehachse umfasst.

**13.** Navigationsinstrument nach Anspruch 12, **dadurch gekennzeichnet, dass** der dritte Orientierungswinkel bestimmt wird, indem zuerst auf den zweiten gemessenen Vektor die erste und zweite aufeinanderfolgende Drehung vorzugsweise in der Reihenfolge angewendet werden, die zwischen der gegebenen Reihenfolge und der umgekehrten Reihenfolge gewählt wird, um den ersten und zweiten Orientierungswinkel zu definieren, um den zweiten neu orientierten Vektor zu erhalten, und danach der Winkel zwischen einer Projektion des zweiten neu orientierten Vektors auf eine zweite Bezugsebene, welche die erste und zweite Bezugsdrehachse umfasst, und der ersten Bezugsdrehachse berechnet wird.

**14.** Navigationsinstrument nach einem der Ansprüche 10 bis 13, **dadurch gekennzeichnet, dass** der zweite gemessene Vektor ein Vektor des terrestrischen Magnetfeldes ist, wobei dieser zweite gemessene Vektor anhand eines Magnetsensors (10) bestimmt wird, der den zweiten Sensor bildet.

**15.** Navigationsinstrument nach einem der Ansprüche 10 bis 14, **dadurch gekennzeichnet, dass** der dritte Orientierungswinkel als Kurs dieses Instruments betrachtet wird.

**16.** Navigationsinstrument nach einem der Ansprüche 1 bis 5, **dadurch gekennzeichnet, dass** der erste gemessene Vektor ein Vektor des terrestrischen Magnetfelds ist, wobei dieser erste gemessene Vektor anhand eines Magnetsensors (10) bestimmt wird, der den ersten Sensor bildet.

**17.** Navigationsinstrument nach Anspruch 16, **dadurch gekennzeichnet, dass** die drei Bezugskomponenten aus Daten vorbestimmt werden, die von einer Ortungsvorrichtung des Navigationsinstruments, insbesondere vom Typ GPS, stammen.

**18.** Navigationsinstrument nach Anspruch 16 oder 17 in Verbindung mit einem der Ansprüche 10 bis 13 in Abhängigkeit von einem der Ansprüche 1 bis 5, **dadurch gekennzeichnet, dass** der zweite gemessene Vektor ein Vektor des terrestrischen Schwerkraftfeldes ist.

**19.** Navigationsinstrument nach Anspruch 18, **dadurch gekennzeichnet, dass** der zweite gemessene Vektor anhand eines Beschleunigungsmessers (6) bestimmt wird, der den zweiten Sensor bildet.

**20.** Navigationsinstrument nach einem der Ansprüche 10 bis 15 in Abhängigkeit von Anspruch 9, **dadurch gekennzeichnet, dass** dieses Instrument ein elektronischer Kompass (4) ist, der einen Indikator (18) für den magnetischen Norden oder den geographischen Norden und Mittel zum Steuern (16) dieses Indikators umfasst, die angeordnet sind, um den Indikator (18) zu steuern, sodass er einen Winkel in Bezug auf die erste Bezugsdrehachse aufweist, der gleich dem Gegenteil des dritten Orientierungswinkels ist, vorzugsweise um die Abweichung des terrestrischen Magnetfelds am Standort, wo sich das Navigationsinstrument befindet, korrigiert, zur Angabe des magnetischen Nordens und zur Angabe des geographischen Nordens zusätzlich zur Untergliederung des terrestrischen Magnetfeldes.

21. Navigationsinstrument nach Anspruch 15 oder Anspruch 20 in Abhängigkeit von Anspruch 15, **dadurch gekennzeichnet, dass** dieses Instrument eine Vorrichtung (20) zur Anzeige von Daten umfasst, die den wahren Kurs angeben, wobei die Einheit zum Berechnen (8) konfiguriert ist, um den wahren Kurs in Abhängigkeit von einem ersten Parameter, der die Untergliederung des terrestrischen Magnetfeldes quantifiziert, und einem zweiten Parameter, der die Abweichung des terrestrischen Magnetfeldes am Standort, an dem sich das Navigationsinstrument befindet, quantifiziert, zu berechnen.

22. Tragbare Vorrichtung (2), die das Navigationsinstrument nach einem der vorstehenden Ansprüche umfasst.

23. Tragbare Vorrichtung nach dem vorstehenden Anspruch, **dadurch gekennzeichnet, dass** diese Vorrichtung, insbesondere eine Armbanduhr (2), am Handgelenk eines Benutzers tragbar ist; und dadurch, dass die erste Bezugsdrehachse ( $\overrightarrow{1_{x'}}$ ) der 6-12-Uhr-Achse entspricht und die zweite Bezugsdrehachse (1) der 9-3-Uhr-Achse dieser am Handgelenk tragbaren Vorrichtung entspricht.

24. Verfahren zum Bestimmen von Orientierungswinkeln eines Navigationsinstruments (4) in Bezug auf ein terrestrisches Bezugssystem ( $\overrightarrow{1_x}$ , $\overrightarrow{1_y}$ , $\overrightarrow{1_z}$ ), wobei dieses Verfahren die folgenden Schritte umfasst:

- Erfassen der drei Komponenten eines ersten Vektors, erster gemessener Vektor genannt, eines ersten terrestrischen Kraftfeldes in einem Bezugssystem ( $\overrightarrow{1_{x'}}$ , $\overrightarrow{1_{y'}}$ , $\overrightarrow{1_{z'}}$ ), das mit dem Navigationsinstrument verbunden ist, bordseitiges Bezugssystem genannt;
- Bestimmen eines ersten Orientierungswinkels und eines zweiten Orientierungswinkels des bordeigenen Bezugssystems in Bezug auf das terrestrischen Bezugssystem, wobei dieser erste und zweite Orientierungswinkel durch zwei aufeinanderfolgende Drehungen des ersten gemessenen Vektors um eine erste Bezugsdrehachse des bordeigenen Bezugssystems für den ersten Orientierungswinkel und eine zweite Bezugsdrehachse des bordeigenen Bezugssystems für den zweiten Orientierungswinkel definiert sind, wodurch es möglich ist, den ersten gemessenen Vektor an einem Berechnungsvektor zu orientieren, der im bordeigenen Bezugssystem drei Berechnungskomponenten aufweist, die gleich den drei Bezugskomponenten eines ersten Bezugsvektors im terrestrischen Bezugssystem sind, der im terrestrischen Bezugssystem vordefiniert oder vorbestimmt ist; wobei das Bestimmen zur Berechnung des ersten und des zweiten Orientierungswinkels einen Schritt der Wahl zwischen einer gegebenen Reihenfolge für die beiden aufeinanderfolgenden Drehungen und einer umgekehrten Reihenfolge basierend auf einem Vergleich zwischen einem Indikator eines Fehlerrisikos, der ein Risiko der Instabilität der Berechnungseinheit beim Bestimmen des ersten und des zweiten Orientierungswinkels quantifiziert, und einem vorbestimmten Schwellenwert zu berechnen, wobei der Indikator des Fehlerrisikos in Abhängigkeit von mindestens zwei der Komponenten des ersten gemessenen Vektors bestimmt wird.

25. Verfahren nach Anspruch 24, **dadurch gekennzeichnet, dass** der Indikator des Fehlerrisikos die Norm der Projektion des ersten Vektors ist, der in einer Ebene senkrecht zur ersten Bezugsdrehachse gemessen wird; und dadurch, dass, wenn der Indikator des Fehlerrisikos größer als der vorbestimmte Schwellenwert ist, der erste Orientierungswinkel gemäß der gegebenen Reihenfolge berechnet wird, indem zuerst unter den zwei aufeinanderfolgenden Drehungen die Drehung des ersten gemessenen Vektors um die erste Bezugsdrehachse durchgeführt wird.

26. Verfahren nach Anspruch 25, **dadurch gekennzeichnet, dass** der Wert des vorbestimmten Schwellenwertes zwischen 0,15 und 0,45 der Norm des ersten gemessenen Vektors, vorzugsweise zwischen 0,20 und 0,30 dieser Norm liegt.

27. Verfahren nach Anspruch 24, **dadurch gekennzeichnet, dass** der Indikator des Fehlerrisikos der Absolutwert des zweiten Orientierungswinkels ist, wenn in der gegebenen Reihenfolge der erste Orientierungswinkel vor dem zweiten Orientierungswinkel berechnet wird; und dadurch, dass, wenn der Indikator des Fehlerrisikos größer als der vorbestimmte Schwellenwert ist, der erste und der zweite Orientierungswinkel erneut in der umgekehrten Reihenfolge berechnet werden, indem unter den beiden aufeinanderfolgenden Drehungen zuerst die Drehung des ersten gemessenen Vektors um die zweite Bezugsdrehachse durchgeführt wird; wobei die Werte des neu berechneten ersten und zweiten Orientierungswinkels dann für diesen ersten und zweiten Orientierungswinkel beibehalten werden.

28. Verfahren nach Anspruch 27, **dadurch gekennzeichnet, dass** der Wert des vorbestimmten Schwellenwerts zwischen 65° und 80°, vorzugsweise zwischen 70° und 75° liegt.

29. Verfahren nach einem der Ansprüche 24 bis 28, **dadurch gekennzeichnet, dass** eine vordefinierte Achse des terrestrischen Bezugssystems an dem ersten Bezugsvektor orientiert ist, wobei dieser erste Bezugsvektor vorzugsweise an einer vertikalen Achse $\overrightarrow{1_z}$ des terrestrischen Bezugssystems orientiert ist.

30. Verfahren nach einem der Ansprüche 24 bis 29, **dadurch gekennzeichnet, dass** der erste gemessene Vektor ein Vektor des terrestrischen Schwerkraftfeldes ist.

31. Verfahren nach dem vorstehenden Anspruch, **dadurch gekennzeichnet, dass** der erste gemessene Vektor anhand eines Beschleunigungsmessers (6) bestimmt wird.

32. Verfahren nach einem der Ansprüche 24 bis 31, **dadurch gekennzeichnet, dass** der erste Orientierungswinkel und der zweite Orientierungswinkel jeweils ein Wankwinkel und ein Nickwinkel sind, wobei der Wankwinkel mit einer Drehung um die erste Bezugsdrehachse verknüpft ist, die der Achse $\overrightarrow{1_{x'}}$ des bordeigenen Bezugssystems entspricht, wenn der Wankwinkel zuerst bestimmt wird, und der Nickwinkel mit einer Drehung um die zweite Bezugsdrehachse verknüpft ist, die der Achse $\overrightarrow{1_{y'}}$ des bordeigenen Bezugssystems entspricht, wenn der Nickwinkel zuerst bestimmt wird.

33. Verfahren nach einem der Ansprüche 24 bis 32, **dadurch gekennzeichnet, dass** das Verfahren weiter einen Schritt zum Erfassen von drei Komponenten eines zweiten Vektors, zweiter gemessener Vektor genannt, eines zweiten terrestrischen Kraftfeldes in dem bordeigenen Bezugssystem ($\overrightarrow{1_{x'}}$, $\overrightarrow{1_{y'}}$, $\overrightarrow{1_{z'}}$) umfasst, wobei dieser zweite gemessene Vektor nicht kollinear mit dem ersten gemessenen Vektor ist, und einen Schritt zum Bestimmen eines dritten Orientierungswinkels des bordeigenen Bezugssystems und somit des Navigationsinstruments in Bezug auf das terrestrische Bezugssystem aus den ersten und zweiten berechneten Orientierungswinkeln und den drei Komponenten des zweiten gemessenen Vektors.

34. Verfahren nach Anspruch 33, **dadurch gekennzeichnet, dass** der dritte Orientierungswinkel bestimmt wird, indem zuerst auf den zweiten gemessenen Vektor die ersten und zweiten aufeinanderfolgenden Drehungen vorzugsweise in der Reihenfolge angewendet werden, die zwischen der gegebenen Reihenfolge und der umgekehrten Reihenfolge gewählt wird, um den ersten und zweiten Orientierungswinkel zu definieren, um den zweiten neu orientierten Vektor zu erhalten, und danach der Winkel zwischen einer Projektion des zweiten neu orientierten Vektors auf eine zweite Bezugsebene, welche die erste und zweite Bezugsdrehachse umfasst, und der ersten Bezugsdrehachse berechnet wird.

35. Verfahren nach Anspruch 33 oder 34 in Abhängigkeit von Anspruch 32, **dadurch gekennzeichnet, dass** der dritte Orientierungswinkel ein Gierwinkel des Navigationsinstruments ist, wobei dieser Gierwinkel durch eine Drehung des bordeigenen Bezugssystems um eine dritte Bezugsdrehachse definiert ist, die der vertikalen Achse $\overrightarrow{1_z}$ im terrestrischen Bezugssystem entspricht, nach der Korrektur des Wankens und Nickens.

36. Verfahren nach Anspruch 35, **dadurch gekennzeichnet, dass** der dritte Orientierungswinkel als Kurs des Navigationsinstruments betrachtet wird.

37. Verfahren nach einem der Ansprüche 33 bis 36 in Abhängigkeit von Anspruch 30 oder 31, **dadurch gekennzeichnet, dass** der zweite Vektor eines zweiten terrestrischen Kraftfeldes ein Vektor des terrestrischen Magnetfeldes ist; und dadurch, dass der zweite Vektor anhand eines Magnetsensors (10) gemessen wird.

**38.** Verfahren nach einem der Ansprüche 24 bis 29, **dadurch gekennzeichnet, dass** der erste Vektor eines ersten terrestrischen Kraftfeldes ein Vektor des terrestrischen Magnetfeldes ist; und dadurch, dass der erste Vektor anhand eines Magnetsensors gemessen wird.

**39.** Verfahren nach Anspruch 38 in Verbindung mit Anspruch 33 oder 34 in Abhängigkeit von einem der Ansprüche 24 bis 29, **dadurch gekennzeichnet, dass** der zweite Vektor eines zweiten terrestrischen Kraftfeldes ein Vektor des terrestrischen Schwerkraftfeldes ist.

**40.** Verfahren nach dem vorstehenden Anspruch, **dadurch gekennzeichnet, dass** der zweite Vektor eines zweiten terrestrischen Feldes anhand eines Beschleunigungsmessers (6) gemessen wird.

**41.** Verfahren nach einem der Ansprüche 38 bis 40, **dadurch gekennzeichnet, dass** die drei Bezugskomponenten aus Daten vorbestimmt werden, die von einer Ortungsvorrichtung des Navigationsinstruments, insbesondere vom Typ GPS, stammen.

**42.** Verfahren nach einem der Ansprüche 24 bis 41, **dadurch gekennzeichnet, dass** das Navigationsinstrument ein elektronischer Kompass (4) ist.

**43.** Verfahren nach Anspruch 36, **dadurch gekennzeichnet, dass** das Navigationsinstrument Mittel (20) zur Anzeige von Daten umfasst, die den wahren Kurs angeben; und dadurch, dass das Verfahren weiter einen Schritt zum Bestimmen des wahren Kurses in Abhängigkeit von dem in einem der vorstehenden Schritte bestimmten Kurs, einem ersten Parameter, der die Untergliederung, und einem zweiten Parameter, der die Abweichung des terrestrischen Magnetfeldes am Standort, an dem sich das Navigationsinstrument befindet, umfasst.

**44.** Verfahren nach einem der Ansprüche 24 bis 43, **dadurch gekennzeichnet, dass** das Navigationsinstrument konfiguriert ist, um an einer tragbaren Vorrichtung (2) montiert oder darin integriert zu werden.

**45.** Verfahren nach dem vorstehenden Anspruch, **dadurch gekennzeichnet, dass** die tragbare Vorrichtung, insbesondere eine Armbanduhr (2), am Handgelenk eines Benutzers tragbar ist; und dadurch, dass die erste Bezugsdrehachse ( $\vec{1}_{x\prime}$ ) der 6-12-Uhr-Achse entspricht, und die zweite Bezugsdrehachse ( $\vec{1}_{y\prime}$ ) der 9-3-Uhr-Achse entspricht.

**46.** Computerprogramm mit Anweisungen, die, wenn das Programm von einem Computer ausgeführt wird, diesen Computer veranlassen, die Schritte des Verfahrens nach einem der Ansprüche 24 bis 45 auszuführen.

**47.** Computerlesbares Speichermedium, das Anweisungen umfasst, die, wenn sie von einem Computer ausgeführt werden, diesen Computer veranlassen, die Schritte des Verfahrens nach einem der Ansprüche 24 bis 45 auszuführen.

**Claims**

**1.** A navigation instrument (4) comprising:

- a first sensor (6) configured to measure three components of a first vector, called first measured vector, of a first terrestrial force field ( $\vec{g\prime}_{mes}$ ; $\vec{B\prime}_{mes}$ ) in a reference frame ( $\vec{1}_{x\prime}$ , $\vec{1}_{y\prime}$ , $\vec{1}_{z\prime}$ ) linked to said navigation instrument, called on-board reference frame, and generate first output signals which are representative of said three components ( $g\prime_{x,mes}, g\prime_{y,mes}, g\prime_{z,mes}$ ; $B\prime_{x,mes}, B\prime_{y,mes}, B\prime_{z,mes}$ );

- an orientation angle ($\varphi$, $\theta$, $\psi$) calculation unit (8) of the navigation instrument, this calculation unit being connected to said first sensor (6) to receive said first output signals and being configured to be able to calculate a first orientation angle ($\varphi$) and a second orientation angle ($\theta$) of said on-board reference frame, and thus of the navigation instrument (4), with respect to a terrestrial reference frame ( $\vec{1}_x$ , $\vec{1}_y$ , $\vec{1}_z$ ), these first and second orientation angles being defined by two successive rotations that the first measured vector must undergo, around a first reference axis of rotation ($\overrightarrow{1_{x'}}$) of the on-board reference frame for the first orientation angle and a second reference axis of rotation ($\overrightarrow{1_{y'}}$) of the on-board reference frame for the second orientation angle, to align this first measured vector on a calculation vector having, in the on-board reference frame, three calculation components which are identical to three reference components, in the terrestrial reference frame, of a first reference vector ($\overrightarrow{g_{ref}}$ ; $\overrightarrow{B_{ref}}$) which is predefined or predetermined in the terrestrial reference frame;
**characterised in that** the orientation angle calculation unit (8) is configured to be able to determine the first and second orientation angles in a given order for said two successive rotations and also in reverse order; and **in that** the calculation unit (8) is arranged to be able to choose between said given order and said reverse order, to calculate the first and second orientation angles, based on a comparison between an indicator of a risk of error, quantifying a risk of instability of said calculation unit during the determination of the first and second orientation angles, and a predetermined threshold, said indicator of the risk of error being determined by the navigation instrument according to at least two of said first output signals.

2. The navigation instrument according to claim 1, **characterised in that** said indicator of the risk of error is the norm of the projection of the first vector measured in a plane perpendicular to the first reference axis of rotation; and **in that** the orientation angle calculation unit (8) is configured to first determine the first orientation angle, by performing among said two successive rotations firstly the rotation of the first vector measured around the first reference axis of rotation, when said indicator of the risk of error is greater than said predetermined threshold.

3. The navigation instrument according to claim 2, **characterised in that** the value of the predetermined threshold is comprised between 0.15 and 0.45 of the norm of the first measured vector, preferably between 0.20 and 0.30 of this norm.

4. The navigation instrument according to claim 1, **characterised in that** said indicator of the risk of error is the absolute value of the second orientation angle when the first orientation angle is calculated before the second orientation angle; and **in that** the orientation angle calculation unit (8) is configured to again determine the first and second orientation angles by first calculating the second orientation angle, by firstly performing among said two successive rotations the rotation of the first measured vector around the second reference axis of rotation, when said indicator of the risk of error is greater than said predetermined threshold; the calculation unit (8) then retaining the values of the first and second orientation angles determined again for these first and second orientation angles.

5. The navigation instrument according to claim 4, **characterised in that** the value of the predetermined threshold is comprised between 65° and 80°, preferably between 70° and 75°.

6. The navigation instrument according to one of the preceding claims, **characterised in that** a predefined axis of the terrestrial reference frame is aligned with the first reference vector, preferably this first reference vector being aligned with a vertical axis $\overrightarrow{1_z}$ of the terrestrial reference frame.

7. The navigation instrument according to the preceding claim, **characterised in that** the first measured vector is a vector of the terrestrial gravitational force field.

8. The navigation instrument according to the preceding claim, **characterised in that** the first measured vector is determined by means of an accelerometer (6) forming said first sensor.

9. The navigation instrument according to one of the preceding claims, **characterised in that** the first reference axis of rotation corresponds to an axis $\overrightarrow{1_{x'}}$ of the on-board reference frame and the second reference axis of rotation corresponds to an axis $\overrightarrow{1_{y'}}$ of the on-board reference frame, these first and second reference axes of rotation being perpendicular.

10. The navigation instrument according to one of the preceding claims, **characterised in that** said instrument includes a second sensor (10) configured to measure the three components of a second vector, called second measured vector, of a second terrestrial force field in the on-board reference frame, this second measured vector being non-collinear with the first measured vector, and to generate second output signals representative of these three components; and **in that** the navigation instrument further comprises a unit (12) for determining a third angle of orientation of said on-board reference frame, and thus of this navigation instrument, relative to the terrestrial reference frame, this determination unit being connected to said second sensor (10) to receive said second output signals and being configured to determine the third orientation angle from said calculated first and second orientation angles and the second output signals.

11. The navigation instrument according to the preceding claim, **characterised in that** said calculation unit (8) and said unit (12) for determining the third orientation angle are formed by one and the same electronic unit which itself forms a central electronic unit (14) of the navigation instrument.

12. The navigation instrument according to claim 10 or 11 dependent on claim 9, **characterised in that** the third orientation angle is defined by a rotation that the second measured vector must undergo, after having been reoriented in the on-board reference frame by an application to this second measured vector of said first and second successive rotations, around a third reference axis of rotation, perpendicular to the first and second reference axes of rotation and corresponding to the third axis $\overrightarrow{1_{z'}}$ of the on-board reference frame, so that the second measured and reoriented vector, called second reoriented vector, is located in a first reference plane of the on-board reference frame comprising the first and third reference axes of rotation.

13. The navigation instrument according to claim 12, **characterised in that** the third orientation angle is determined by first applying to the second measured vector said first and second successive rotations, preferably in the order chosen between said given order and said reverse order to define the first and second orientation angles, so as to obtain the second reoriented vector, then by calculating the angle between a projection, in a second reference plane comprising the first and second reference axes of rotation, of the second reoriented vector and the first reference axis of rotation.

14. The navigation instrument according to one of claims 10 to 13, **characterised in that** the second measured vector is a vector of the terrestrial magnetic field, this second measured vector being determined by means of a magnetic sensor (10) forming said second sensor.

15. The navigation instrument according to one of claims 10 to 14, **characterised in that** the third orientation angle is considered as a heading of this instrument.

16. The navigation instrument according to one of claims 1 to 5, **characterised in that** the first measured vector is a vector of the terrestrial magnetic field, this first measured vector being determined by means of a magnetic sensor (10) forming said first sensor.

17. The navigation instrument according to claim 16, **characterised in that** said three reference components are predetermined from data originating from a location device of the navigation instrument, in particular of the GPS type.

18. The navigation instrument according to claim 16 or 17 combined with one of claims 10 to 13 dependent on one of claims 1 to 5, **characterised in that** the second measured vector is a vector of the terrestrial gravitational force field.

19. The navigation instrument according to claim 18, **characterised in that** the second measured vector is determined by means of an accelerometer (6) which forms said second sensor.

20. The navigation instrument according to one of claims 10 to 15 dependent on claim 9, **characterised in that** this instrument is an electronic compass (4) which comprises an indicator (18) of magnetic North or geographic North and means (16) for controlling this indicator, which are arranged to control the indicator (18) so that it has an angle relative to the first reference axis of rotation equal to the opposite of the third orientation angle, preferably the correction of the deviation of the terrestrial magnetic field at the location of the navigation instrument for the indication of magnetic north and, for the indication of geographic north, in addition to the declination of the terrestrial magnetic field.

21. The navigation instrument according to claim 15 or claim 20 dependent on claim 15, **characterised in that** this instrument comprises a device (20) for displaying data indicating the true heading, said calculation unit (8) being configured to calculate the true heading according to said heading, of a first parameter quantifying the declination of the terrestrial magnetic field and a second parameter quantifying the deviation of the terrestrial magnetic field at the location where the navigation instrument is located.

22. A Wearable device (2) comprising the navigation instrument according to one of the preceding claims.

23. The wearable device according to the preceding claim, **characterised in that** this device, in particular a wristwatch (2), is wearable on the wrist of a user; and **in that** the first reference axis of rotation ( $\overrightarrow{1_{x'}}$ ) corresponds to the 6-12 o'clock axis and the second reference axis of rotation ( $\overrightarrow{1_{y'}}$ ) corresponds to the 9-3 o'clock axis of this device wearable on the wrist.

24. A method for determining the angles of orientation of a navigation instrument (4) with respect to a terrestrial reference frame ( $\overrightarrow{1_x}$ , $\overrightarrow{1_y}$ , $\overrightarrow{1_z}$ ), this method comprising the following steps:

- acquisition of the three components of a first vector, called first measured vector, of a first terrestrial force field in a reference frame ( $\overrightarrow{1_{x'}}$ , $\overrightarrow{1_{y'}}$ , $\overrightarrow{1_{z'}}$ ) linked to said navigation instrument, called on-board reference frame;
- determination of a first angle of orientation and of a second angle of orientation of the on-board reference frame with respect to the terrestrial reference frame, these first and second orientation angles being defined by two successive rotations of the first measured vector, around a first reference axis of rotation of the on-board reference frame for the first orientation angle and a second reference axis of rotation of the on-board reference frame for the second orientation angle, allowing to align the first measured vector with a calculation vector having, in the on-board reference frame, three calculation components which are identical with three reference components, in the terrestrial reference frame, of a first reference vector which is predefined or predetermined in the terrestrial reference frame; said determination comprising, to calculate the first and second orientation angles, a step of choosing between a given order for the two successive rotations and a reverse order based on a comparison between an indicator of a risk of error, quantifying a risk of instability during the determination of the first and second orientation angles, and a predetermined threshold, said indicator of the risk of error being determined based on at least two of said components of the first measured vector.

25. The method according to claim 24, **characterised in that** said indicator of the risk of error is the norm of the projection of the first vector measured in a plane perpendicular to the first reference axis of rotation; and **in that**, when said indicator of the risk of error is greater than said predetermined threshold, the first orientation angle is calculated based on said given order by firstly performing, among said two successive rotations, the rotation of the first vector measured around the first reference axis of rotation.

26. The method according to claim 25, **characterised in that** the value of the predetermined threshold is comprised between 0.15 and 0.45 of the norm of the first measured vector, preferably between 0.20 and 0.30 of this norm.

27. The method according to claim 24, **characterised in that** said indicator of the risk of error is the absolute value of the second orientation angle when, in said given order, the first orientation angle is calculated before the second orientation angle; and **in that**, when said indicator of the risk of error is greater than said predetermined threshold, the first and second orientation angles are again calculated in said reverse order by performing, among said two successive rotations, firstly the rotation of the first vector measured around the second reference axis of rotation; the values of the recalculated first and second orientation angles then being retained for these first and second orientation angles.

28. The method according to claim 27, **characterised in that** the value of the predetermined threshold is comprised between 65° and 80°, preferably between 70° and 75°.

29. The method according to one of claims 24 to 28, **characterised in that** a predefined axis of the terrestrial reference frame is aligned with the first reference vector, preferably this first reference vector being aligned with a vertical axis $\overrightarrow{1_z}$ of the terrestrial reference frame.

30. The method according to one of claims 24 to 29, **characterised in that** the first measured vector is a vector of the terrestrial gravitational force field.

31. The method according to the preceding claim, **characterised in that** the first measured vector is determined by means of an accelerometer (6).

32. The method according to one of claims 24 to 31, **characterised in that** the first orientation angle and the second orientation angle are respectively a roll angle and a pitch angle, the roll angle being associated with a rotation around the first reference axis of rotation, corresponding to the axis $\overrightarrow{1_{x\prime}}$ of the on-board reference frame when the roll angle is determined first, and the pitch angle being associated with a rotation around the second reference axis of rotation, corresponding to the axis $\overrightarrow{1_{y\prime}}$ of the on-board reference frame when the pitch angle is determined first.

33. The method according to one of claims 24 to 32, **characterised in that** the method further comprises a step of acquiring three components of a second vector, called second measured vector, of a second terrestrial force field in said on-board reference frame ($\overrightarrow{1_{x\prime}}$, $\overrightarrow{1_{y\prime}}$, $\overrightarrow{1_{z\prime}}$), this second measured vector being non-collinear with the first measured vector, and a step of determining a third orientation angle of the on-board reference frame, and thus of said navigation instrument, with respect to the terrestrial reference frame from the first and second calculated orientation angles and from the three components of the second measured vector.

34. The method according to claim 33, **characterised in that** the third orientation angle is determined by first applying to the second measured vector said first and second successive rotations, preferably in the order chosen between said given order and said reverse order, to obtain a second measured and reoriented vector, called second reoriented vector, in the on-board reference frame, then by calculating the angle between a projection of the second reoriented vector in a reference plane, comprising the first and second reference axes of rotation, and the first reference axis of rotation.

35. The method according to claim 33 or 34 dependent on claim 32, **characterised in that** the third orientation angle is a yaw angle of the navigation instrument, this yaw angle being defined by a rotation of the on-board reference frame around a third reference axis of rotation, corresponding to the vertical axis $\overrightarrow{1_{z}}$ in the terrestrial reference frame, after roll and pitch corrections.

36. The method according to claim 35, **characterised in that** the third orientation angle is considered as a heading of the navigation instrument.

37. The method according to one of claims 33 to 36 dependent on claim 30 or 31, **characterised in that** the second vector of a second terrestrial force field is a vector of the terrestrial magnetic field; and **in that** said second vector is measured by means of a magnetic sensor (10).

38. The method according to one of claims 24 to 29, **characterised in that** the first vector of a first terrestrial force field is a vector of the terrestrial magnetic field; and **in that** said first vector is measured by means of a magnetic sensor.

39. The method according to claim 38 combined with claim 33 or 34 dependent on any one of claims 24 to 29, **characterised in that** the second vector of a second terrestrial force field is a vector of the terrestrial gravitational force field.

40. The method according to the preceding claim, **characterised in that** the second vector of a second terrestrial field is measured by means of an accelerometer (6).

41. The method according to any one of claims 38 to 40, **characterised in that** said three reference components are determined from data coming from a location device of the navigation instrument, in particular of the GPS type.

42. The method according to one of claims 24 to 41, **characterised in that** said navigation instrument is an electronic compass (4).

43. The method according to claim 36, **characterised in that** said navigation instrument comprises means (20) for displaying data indicating the true heading; and **in that** the method further comprises a step of determining the true heading according to said heading determined in one of the preceding steps, of a first parameter quantifying the declination and of a second parameter quantifying the deviation of the terrestrial magnetic field at the location where the navigation instrument is located.

44. The method according to one of claims 24 to 43, **characterised in that** the navigation instrument is configured to be mounted on or integrated into a wearable device (2).

45. The method according to the preceding claim, **characterised in that** the wearable device, in particular a wristwatch (2), is wearable on a user's wrist; and **in that** the first reference axis of rotation ( $\overrightarrow{1_{x\prime}}$ ) corresponds to the 6-12 o'clock axis, and the second reference axis of rotation ( $\overrightarrow{1_{y\prime}}$ ) corresponds to the 9-3 o'clock axis.

46. A computer program comprising instructions which, when the program is executed by a computer, cause this computer to implement the steps of the method according to one of claims 24 to 45.

47. A computer-readable recording medium comprising instructions which, when executed by a computer, cause this computer to carry out the steps of the method according to one of claims 24 to 45.

## Fig. 1

## Fig. 2

Fig. 3

Fig. 4a

Fig. 4b

# Fig. 5

Amplitude maximale du bruit

$\overrightarrow{1_{z'}}$

$g'_z$

$\varphi$

Valeur réelle

$\overrightarrow{1_{y'}}$

$g'_y$

Plage de mesures

$\overrightarrow{1_{z'}}$

$g'_z$

Amplitude maximale du bruit

$\varphi$

$\overrightarrow{1_{y'}}$

$g'_y$

Plage de mesures

# Fig. 6

$\overrightarrow{1_{z'}}$

$g'_z$

rayon limite

$\overrightarrow{1_{y'}}$

$g'_y$

## Fig. 7a

Cap calculé pour un roulis de 0°

## Fig. 7b

Différence de cap calculé pour un roulis de 10°

## Fig. 7c

Différence de cap calculé pour un roulis de 45°

# Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1669718 A1
- US 20040187328 A
- US 20130185018 A